(19)

**Europäisches Patentamt**
**European Patent Office**
**Office européen des brevets**

(11) **EP 4 718 700 A1**

(12) **EUROPEAN PATENT APPLICATION**

(43) Date of publication:
01.04.2026 Bulletin 2026/14

(21) Application number: 25204928.3

(22) Date of filing: 26.09.2025

(51) International Patent Classification (IPC):
H02M 3/00 (2006.01)  H02M 3/335 (2006.01)
H02M 1/12 (2006.01)  H02M 1/44 (2007.01)
H02M 1/00 (2006.01)  H01F 27/38 (2006.01)
H04B 1/69 (2011.01)

(52) Cooperative Patent Classification (CPC):
H02M 3/33569; H01F 27/385; H02M 1/0064;
H02M 1/123; H02M 1/126; H02M 1/44; H02M 3/01;
H02M 3/33571; H02M 3/33573; H02M 3/33576;
H02M 3/33584; H02M 3/33592; H04B 1/69

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 27.09.2024 US 202463700104 P
30.09.2024 US 202463700857 P
25.03.2025 US 202563777239 P

(71) Applicant: **Delta Electronics, Inc.**
**Neihu, Taipei 11491 (TW)**

(72) Inventors:
• Phukan, Ripun
Morrisville, NC 27560 (US)
• Wu, Hsueh-Ju
Morrisville, NC 27560 (US)
• Barbosa, Peter Mantovanelli
Morrisville, NC 27560 (US)
• Zhang, Boyi
Morrisville, NC 27560 (US)

(74) Representative: **Uexküll & Stolberg**
**Partnerschaft von**
**Patent- und Rechtsanwälten mbB**
**Beselerstraße 4**
**22607 Hamburg (DE)**

(54) **RESONANT CONVERTER**

(57) A resonant converter (100) is provided. The resonant converter (100) includes a primary circuit (2), an integrated transformer (1), a secondary circuit (3), a local ground (102), a first Y capacitor (CY1, CY2) and a second Y capacitor (CY3, CY4). The primary circuit (2) has a first positive line and a first negative line. The integrated transformer (1) is electrically connected to the primary circuit (2). The secondary circuit (3) is electrically connected to the integrated transformer (1) and has a second positive line and a second negative line.

The first Y capacitor (CY1, CY2) is coupled between the local ground (102) and the first positive line or the first negative line of the primary circuit (2). The second Y capacitor (CY3, CY4) is coupled between the local ground (102) and the second positive line or the second negative line of the secondary circuit (3). The first Y capacitor (CY1, CY2), the second Y capacitor (CY3, CY4) and the local ground (102) are configured to circulate common mode noise currents between the primary circuit (2) and the secondary circuit (3).

100

FIG. 1

EP 4 718 700 A1

**Description**

FIELD OF THE INVENTION

The present disclosure relates to a converter, and more particularly to a resonant converter.

BACKGROUND OF THE INVENTION

A resonant converter is a type of power electronic converter that utilizes resonance principles for energy conversion and is commonly applied in high-efficiency power supply systems. The basic concept is to form a resonant network using inductors and capacitors, so that the switching devices can be turned on or off under conditions close to zero voltage or zero current, thereby significantly reducing switching losses and electromagnetic interference. Compared with conventional hard-switching converters, resonant converters are capable of maintaining high efficiency even at high operating frequencies, making them particularly suitable for high power density power supply designs.

Common resonant converter topologies include series resonant, parallel resonant, and series-parallel hybrid types. The key aspects of resonant converter design lie in the selection of resonant tank parameters, regulation of operating frequency, and optimization of control strategies to achieve a balance among efficiency, size, and reliability. With the rapid development of renewable energy and electric vehicle applications, the importance and application scope of resonant converters continue to expand.

SUMMARY OF THE INVENTION

In accordance with an aspect of the present disclosure, a resonant converter is provided. The resonant converter includes a primary circuit, an integrated transformer, a secondary circuit, a local ground, a first Y capacitor and a second Y capacitor. The primary circuit has a first positive line and a first negative line, and includes primary switches electrically connected between the first positive line and the first negative line of the primary circuit. The integrated transformer is electrically connected to the primary circuit. The secondary circuit is electrically connected to the integrated transformer, has a second positive line and a second negative line, and includes secondary switches electrically connected between the second positive line and the second negative line of the secondary circuit. The first Y capacitor is coupled between the local ground and the first positive line or the first negative line of the primary circuit. The second Y capacitor is coupled between the local ground and the second positive line or the second negative line of the secondary circuit. The first Y capacitor, the second Y capacitor and the local ground are configured to circulate common mode noise currents between the primary circuit and the secondary circuit.

BRIEF DESCRIPTION OF THE DRAWINGS

FIG. 1 is a schematic block diagram illustrating a resonant converter according to an embodiment of the present disclosure;
FIG. 2 is a schematic perspective view illustrating a magnetic core of the integrated transformer according to an embodiment of the present disclosure;
FIG. 3A and FIG. 3B schematically show the primary and second windings wound on the magnetic core;
FIG. 3C schematically shows distribution of the primary winding, the secondary winding, and the shielding winding being wound on the magnetic core;
FIG. 4A schematically shows the primary and secondary windings wound on the magnetic core in a conventional sequential winding manner;
FIG. 4B schematically shows the primary and secondary windings wound on the magnetic core in a staggered winding manner;
FIG. 5A and FIG. 5B schematically show winding directions of the primary and secondary windings in FIG. 4A and FIG. 4B respectively;
FIG. 6A schematically shows the spatial voltage distribution of the primary and secondary windings, as it's traversed along the winding in clockwise sense from bottom left to bottom right arranged in the conventional sequential winding manner shown in FIG. 4A;
FIG. 6B schematically shows the spatial voltage distribution of the primary and secondary winding, as it's traversed along the winding in clockwise sense from bottom left to bottom right arranged in the staggered winding manner shown in FIG. 4B;
FIG. 7 schematically shows the primary, secondary and additional shielding windings arranged in a staggered winding manner;

FIG. 8A schematically shows the primary, secondary and shielding windings of FIG. 7 wound on the magnetic core with the shielding winding portions adopting series connection;

FIG. 8B schematically shows the primary, secondary and shielding windings of FIG. 7 wound on the magnetic core with the shielding winding portions adopting parallel connection;

FIG. 9A schematically shows the voltage distribution of the primary, secondary and shielding windings shown in FIG. 8A;

FIG. 9B schematically shows the voltage distribution of the primary, secondary and shielding windings shown in FIG. 8B;

FIG. 10A schematically shows the direction of the DM current flowing through the primary winding and the flux patterns;

FIG. 10B schematically shows the direction of the CM current flowing through the primary winding and the flux patterns;

FIG. 11A schematically shows the comparison of transfer gains of the embodiments shown in FIG. 4A and FIG. 4B;

FIG. 11B schematically shows the comparison of CM impedances of the embodiments shown in FIG. 4A and FIG. 4B;

FIG. 11C schematically shows the comparison of CM noises of the embodiments shown in FIG. 4A and FIG. 4B;

FIG. 12A schematically shows the comparison of transfer gains of the embodiments shown in FIG. 4B and FIG. 8B;

FIG. 12B schematically shows the comparison of transfer gains of the embodiments shown in FIG. 4B, FIG. 8A, and FIG. 8B;

FIG. 13A schematically shows the proposed integrated transformer structure of the present application;

FIG. 13B schematically shows a conventional transformer structure;

FIG. 14A schematically shows the comparison of CM impedances of the embodiments shown in FIG. 13A and FIG. 13B;

FIG. 14B schematically shows the comparison of CM noises of the embodiments shown in FIG. 13A and FIG. 13B;

FIG. 15 is a schematic view illustrating a structure and a corresponding equivalent circuit of an integrated transformer according to another embodiment of the present disclosure;

FIG. 16A, FIG. 16B and FIG. 16C schematically show different structures and corresponding equivalent circuits of the integrated transformer according to different embodiments of the present disclosure;

FIG. 17 is a schematic circuit diagram illustrating a resonant converter according to an embodiment of the present disclosure;

FIG. 18 schematically shows a CM equivalent circuit of the resonant converter of FIG. 17;

FIG. 19 schematically shows conducted emissions test results with and without the local ground scheme of the present disclosure;

FIG. 20 schematically shows conducted emissions test results with and without the proposed magnetic integration scheme and the local ground scheme of the present disclosure;

FIG. 21 is a schematic block diagram illustrating the controller, integrated with spread spectrum (SS) modulation as per an embodiment of present disclosure, of the resonant converter shown in FIG. 17;

FIG. 22A schematically shows the waveforms of the primary and secondary voltages of the resonant converter operating in the buck mode and adopting the spread spectrum scheme;

FIG. 22B schematically shows the waveforms of the primary and secondary voltages of the resonant converter operating in the DCX mode and adopting the spread spectrum scheme;

FIG. 22C schematically shows the waveforms of the primary and secondary voltages of the resonant converter operating under the boost mode and adopting the spread spectrum scheme;

FIG. 23A schematically shows the relation curve of the synchronization time and the switching frequency of the resonant converter under the DCX mode to maintain same voltage gain under SS modulation;

FIG. 23B schematically shows the waveforms of the switching frequency, the synchronization time, and the output voltage of the resonant converter operating in the DCX mode and adopting the spread spectrum scheme;

FIG. 23C shows the waveforms of FIG. 23B during a certain period of time;

FIG. 24 schematically shows a CM equivalent model of the resonant converter according to an embodiment of the present disclosure;

FIG. 25 schematically show the comparison of CM noises measured at LISN terminals of FIG. 24 with and without applying the spread spectrum scheme;

FIG. 26 schematically show the comparison of CM noises measured at LISN terminals of FIG. 24 with and without applying the spread spectrum scheme and the mathematical solution based on the spectrum analyzer;

FIG. 27A schematically show the comparison of CM noises with and without applying the spread spectrum scheme when the modulation frequency is greater than RBW of the spectrum analyzer;

FIG. 27B schematically show the comparison of CM noises with and without applying the spread spectrum scheme when the modulation frequency is substantially equal to RBW;

FIG. 27C schematically show the comparison of CM noises with and without applying the spread spectrum scheme when the modulation frequency is smaller than RBW;

FIG. 28A schematically shows the waveforms of the switching frequency, the synchronization time, and the output voltage of the resonant converter operating in the DCX mode and adopting a closed loop implementation of the spread spectrum scheme;

FIG. 28B shows the waveforms of FIG. 28A during a certain period of time;

FIG. 29A schematically shows the relation curve of the delay time and the switching frequency of the resonant converter under the boost mode;

FIG. 29B schematically shows the relation curve of the synchronization time and the switching frequency of the resonant converter under the boost mode;

FIG. 30A schematically shows the waveforms of the switching frequency, the synchronization time, the delay time, and the output voltage of the resonant converter operating in the boost mode and adopting an open loop implementation of the spread spectrum scheme;

FIG. 30B shows the waveforms of FIG. 30A during a certain period of time;

FIG. 31A schematically shows the waveforms of the switching frequency, the synchronization time, the delay time, and the output voltage of the resonant converter operating in the boost mode and adopting a closed loop implementation of the spread spectrum scheme;

FIG. 31B shows the waveforms of FIG. 31A during a certain period of time;

FIG. 32 schematically show the comparison of CM noises with and without applying the spread spectrum scheme under the boost mode;

FIG. 33A schematically shows the relation curve of the phase shift time and the switching frequency of the resonant converter under the buck mode;

FIG. 33B schematically shows the relation curves of the synchronization time and the switching frequency of the resonant converter under the buck mode with different primary phase shift time;

FIG. 34A schematically shows the waveforms of the switching frequency, the synchronization time, and the output voltage of the resonant converter operating in the buck mode and adopting an open loop implementation of the spread spectrum scheme;

FIG. 34B shows the waveforms of FIG. 34A during a certain period of time;

FIG. 35A schematically shows the waveforms of the switching frequency, the phase shift time, the synchronization time, and the output voltage of the resonant converter operating in the buck mode and adopting a closed loop implementation of the spread spectrum scheme;

FIG. 35B shows the waveforms of FIG. 35A during a certain period of time;

FIG. 36 schematically show the comparison of CM noises with and without applying the spread spectrum scheme under the buck mode;

FIG. 37 schematically shows simulation results of CM noises with and without the proposed magnetic integration scheme, local ground scheme, and spread spectrum scheme of the present disclosure; and

FIG. 38A and FIG. 38B schematically show conducted emissions test results with and without the proposed magnetic integration scheme, local ground scheme, and spread spectrum scheme.

## DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

An integrated filter solution for an isolated DC-DC resonant converter system for wide gain range applications is proposed. There are three specific schemes in the present disclosure. Firstly, an integrated planar PCB (printed circuit board) based transformer with inherent common mode attenuation is proposed to block EMI (electromagnetic interference) noise, propagating from primary to secondary side. Secondly, a local ground shielding technique is proposed to circulate CM (common mode) noise currents within the converter system, i.e., circulating CM current between primary and secondary sides of the isolation stage, so as to reduce the high-frequency noise. Thirdly, software-based technique of spread spectrum scheme for resonant converters is proposed, operating under variable frequency control.

High-frequency isolated DC-DC power converters, such as resonant converters (e.g., LLC and CLLLC topologies), are widely used in data centers, EV chargers, and telecom systems due to their high efficiency and power density. However, these converters often face significant challenges in electromagnetic interference (EMI) suppression, particularly for common mode (CM) noise.

In conventional designs, EMI filtering is typically addressed through the use of discrete passive filters positioned at the input and output sides. While effective to a certain degree, these solutions occupy considerable board area, increase cost and component count, and may introduce additional parasitic elements that affect high-frequency performance.

Moreover, the separation of the filter and transformer components often results in suboptimal impedance matching and limited noise suppression bandwidth.

Another limitation of conventional transformers lies in their symmetric winding structures, which may lead to strong electric field coupling between windings. This coupling facilitates high-frequency displacement currents that manifest as common mode noise. To mitigate this, shielding layers are sometimes introduced. However, traditional shielding approaches may introduce unwanted parasitic capacitance that compromises soft-switching conditions such as zero-voltage switching (ZVS).

Furthermore, attempts to integrate differential mode (DM) and CM inductors with the main transformer are often constrained by magnetic core geometry and limited magnetic flux separation, resulting in insufficient filtering capability or excessive magnetic losses. These issues become more prominent as operating frequencies increase and layout constraints become tighter.

Therefore, an integrated planar PCB based transformer is provided in the present disclosure to overcome the drawbacks of these conventional technologies.

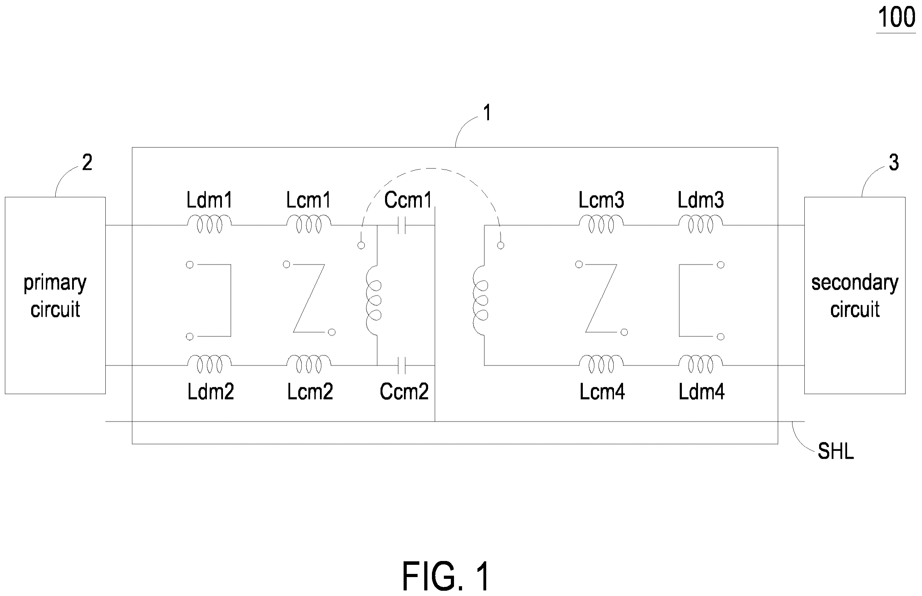

FIG. 1 is a schematic block diagram illustrating a resonant converter according to an embodiment of the present disclosure. As shown in FIG. 1, the resonant converter 100 includes a primary circuit 2, an integrated transformer 1, and a secondary circuit 3. The integrated transformer 1 is electrically connected between the primary circuit 2 and the secondary circuit 3. A primary winding and a secondary winding of the integrated transformer 1 is electrically connected to the primary circuit 2 and the secondary circuit 3 respectively. The primary winding may form integrated DM (differential mode) inductors Ldm1 and Ldm2 and integrated CM inductors Lcm1 and Lcm2, which are regarded as baby inductors and are designed to provide DM and CM impedance for enhancing overall EMI performance. The integrated transformer 1 further includes a shielding layer SHL disposed between the primary winding and the secondary winding to enhance the filtering performance. Further, the integrated transformer 1 may further include integrated CM capacitances Ccm1 and Ccm2 coupled between the primary winding and the shielding layer SHL. In an embodiment, the secondary winding may form integrated DM inductors Ldm3 and Ldm4 and integrated CM inductors Lcm3 and Lcm4, which are regarded as baby inductors and are designed to provide DM and CM impedance for enhancing overall EMI performance.

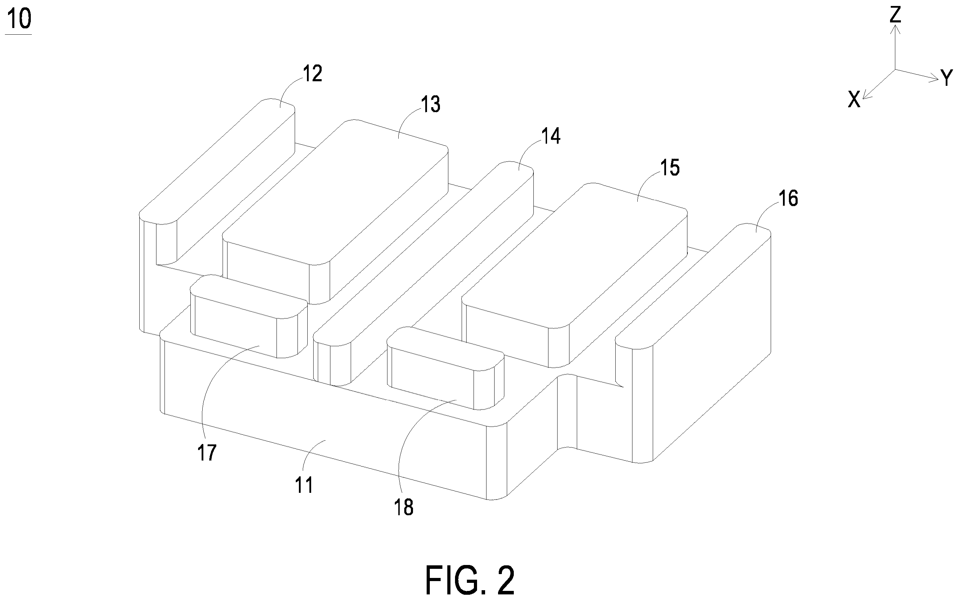

FIG. 2 is a schematic perspective view illustrating a magnetic core of the integrated transformer according to an embodiment of the present disclosure. As shown in FIG. 2, the integrated transformer 1 includes a magnetic core 10. In FIG. 2, the magnetic core 10 is located in a three-dimensional coordinate system with a first axis X, a second axis Y, and a third axis Z. The magnetic core 10 includes a plate 11, a first side pillar 12, a first winding pillar 13, a middle pillar 14, a second winding pillar 15, a second side pillar 16, a third winding pillar 17, and a fourth winding pillar 18. The first side pillar 12, the first winding pillar 13, the middle pillar 14, the second winding pillar 15, the second side pillar 16, the third winding pillar 17, and the fourth winding pillar 18 are disposed on the plate 11. Further, the first side pillar 12, the first winding pillar 13, the middle pillar 14, the second winding pillar 15, and the second side pillar 16 are arranged in sequence along the second axis Y. The first winding pillar 13 and the third winding pillar 17 are arranged along the first axis X, and the second winding pillar 15 and the fourth winding pillar 18 are arranged along the first axis X. Additionally, the middle pillar 14 is extended toward the first axis X to let at least a part of the middle pillar 14 be located between the third winding pillar 17 and the fourth winding pillar 18. In other words, the third winding pillar 17, the said part of the middle pillar 14, and the fourth winding pillar 18 are arranged along the second axis Y. In an embodiment, the integrated transformer 1 may include another magnetic core assembled to the magnetic core 10 and having a planar shape or a structure symmetrical with the structure of the magnetic core 10.

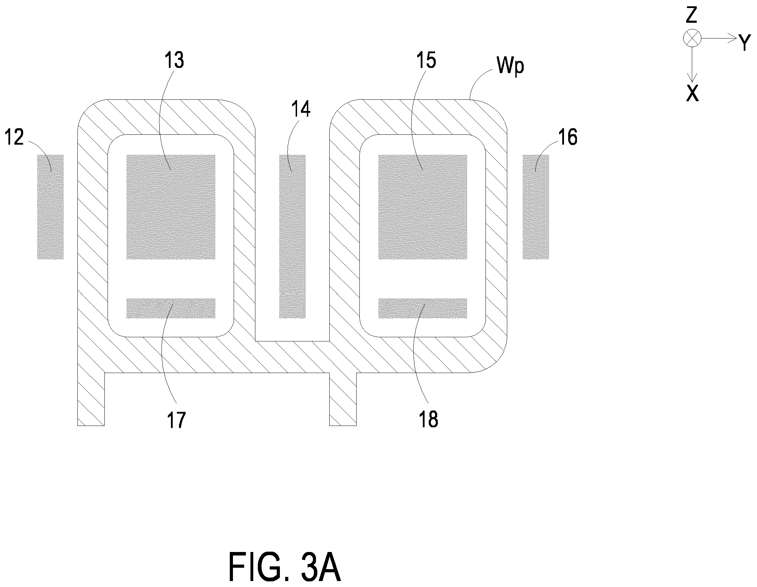

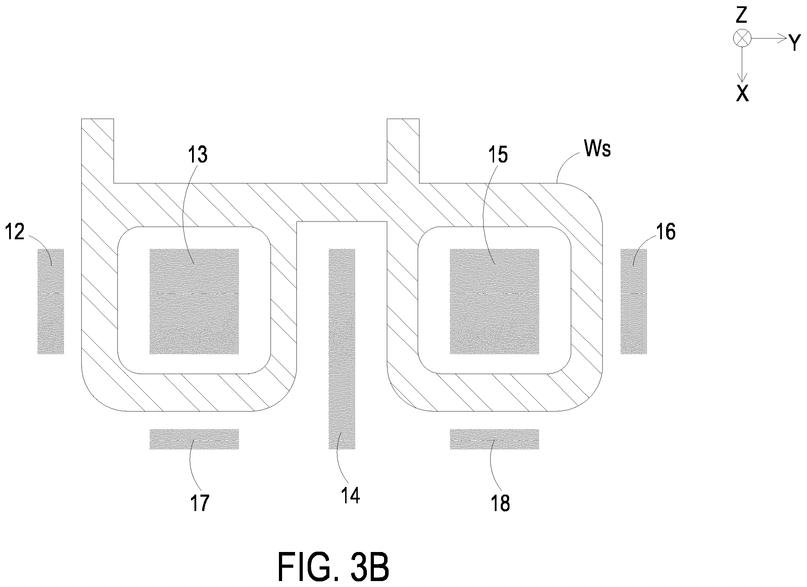

FIG. 3A and FIG. 3B schematically show the primary and second windings wound on the magnetic core. In an embodiment, as exemplified in FIG. 3A and FIG. 3B, the primary winding Wp is wound on the inner pillars (i.e., the first and second winding pillars 13 and 15) and outer pillars (i.e., the third and fourth winding pillars 17 and 18), and the secondary winding Ws is wound on the inner pillars. In specific, some primary winding portions of the primary winding Wp are wound on the first winding pillar 13 and the third winding pillar 17, and the other primary winding portions of the primary winding Wp are wound on the second winding pillar 15 and the fourth winding pillar 18. Some secondary winding portions of the secondary winding Ws are wound on the first winding pillar 13, and the other secondary winding portions of the secondary winding Ws are wound on the second winding pillar 15. Accordingly, part of the primary winding Wp provides MMF (magnetomotive force) to the third and fourth winding pillars 17 and 18, resulting in baby inductors (i.e., the integrated DM inductors Ldm1 and Ldm2 and integrated CM inductors Lcm1 and Lcm2 shown in FIG. 1). In another embodiment, the secondary winding Ws may also be wound on the inner and outer pillars, and thus part of the secondary winding Ws provides MMF to the third and fourth winding pillars 17 and 18, resulting in baby inductors (i.e., the integrated DM inductors Ldm3 and Ldm4 and integrated CM inductors Lcm3 and Lcm4 shown in FIG. 1). In further another embodiment, the primary winding Wp and the secondary winding Ws may be wound on the first and second winding pillars 13 and 15 and may not be wound on the third and fourth winding pillars 17 and 18, and under this circumstance, the magnetic core 10 may don't include the third and fourth winding pillars 17 and 18.

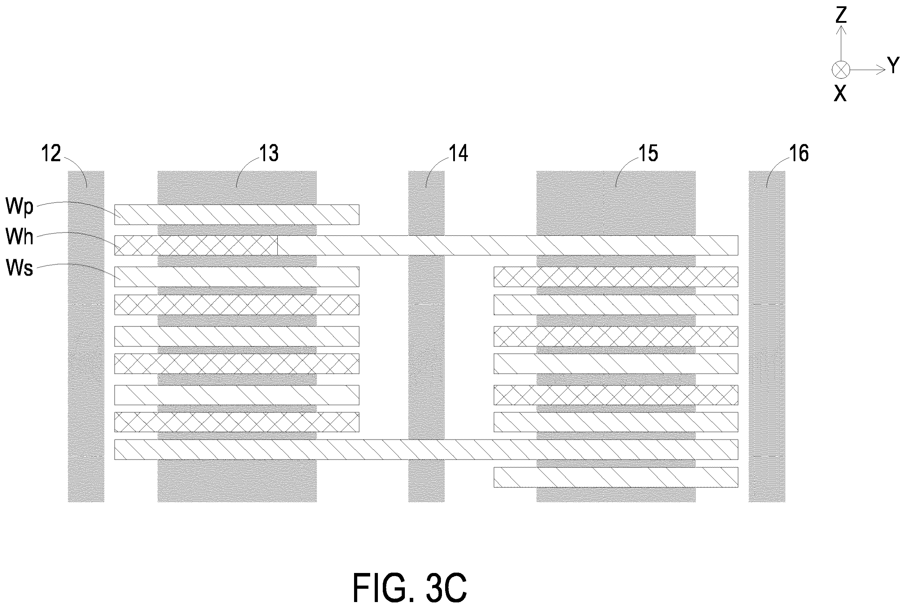

FIG. 3C schematically shows distribution of the primary winding, the secondary winding, and the shielding winding being wound on the magnetic core. In an embodiment, as shown in FIG. 3C, the primary winding Wp and the secondary winding Ws are interleaved. Specifically, each primary winding portion of the primary winding Wp is alternated with a secondary winding portion of the secondary winding Ws to form an interleaved structure. Moreover, the shielding layer SHL is formed by a shielding winding Wh including plural shielding winding portions, and a shielding winding portion is provided between each pair of adjacent primary and secondary winding portions. The shielding winding Wh is configured to reduce capacitive coupling and suppress common mode noise. In FIG. 3C, the primary winding portions of primary winding Wp, the secondary winding portions of secondary winding Ws, and the shielding winding portions of shielding winding Wh are depicted using blocks with different fill patterns to facilitate distinction. For example, each winding portion may be one turn; alternatively, the windings may adopt planar PCB-based winding, and each winding portion may be one layer. In addition, the number of turns of the primary winding portions on the first winding pillar 13 (or on the first winding pillar 13 and the third winding pillar 17) may be different from that on the second winding pillar 15 (or on the second winding pillar 15 and the fourth winding pillar 18), and the number of turns of the secondary winding portions on the first winding pillar 13 (or on the first winding pillar 13 and the third winding pillar 17) may be different from that on the second winding pillar 15 (or on the second winding pillar 15 and the fourth winding pillar 18), so as to form asymmetric winding distribution. Consequently, by using the interleaved, staggered and asymmetric winding distribution, the leakage inductance is realized, and the anti-resonance effect is reduced.

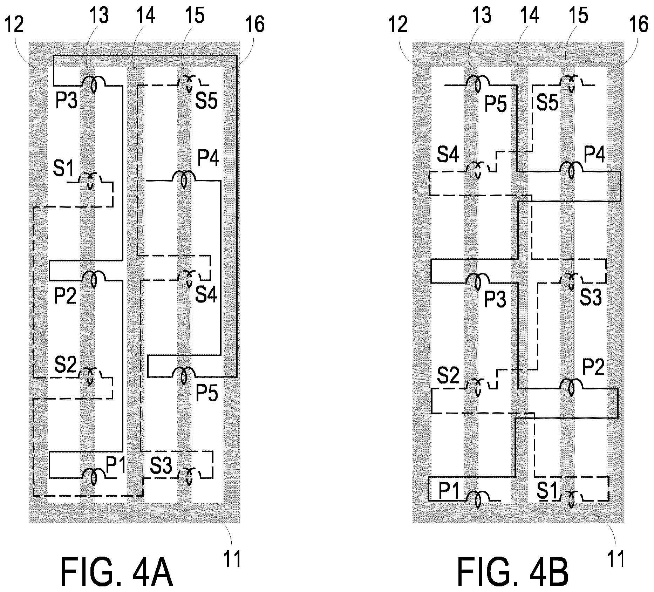

FIG. 4A schematically shows the primary and secondary windings wound on the magnetic core in a conventional sequential winding manner, and FIG. 4B schematically shows the primary and secondary windings wound on the magnetic core in a staggered winding manner. In the conventional sequential winding manner, as shown in FIG. 4A, each of the primary and secondary windings Wp and Ws is wound on the one of the first and second winding pillars 13 and 15 first and then on the other of the first and second winding pillars 13 and 15. While in the staggered winding manner, as shown in FIG. 4B, each of the primary and secondary windings Wp and Ws are alternately wound on the first and second winding pillars 13 and 15. In specific, the primary winding portions of the primary winding Wp are coupled sequentially, the odd-numbered primary winding portions are wound on the first winding pillar 13, and the even-numbered primary winding portions are wound on the second winding pillar 15. Similarly, the secondary winding portions of the secondary winding Ws are coupled sequentially, the even-numbered secondary winding portions are wound on the first winding pillar 13, and the odd-numbered secondary winding portions are wound on the second winding pillar 15.

For example, the primary winding Wp includes five primary winding portions P1, P2, P3, P4 and P5 coupled in sequence, and the secondary winding Ws includes five secondary winding portions S1, S2, S3, S4 and S5 coupled in sequence. In the conventional sequential winding manner shown in FIG. 4A, the primary winding portions P1, P2 and P3 are wound on the first winding pillar 13, and the primary winding portions P4 and P5 are wound on the second winding pillar 15; the secondary winding portions S1 and S2 are wound on the first winding pillar 13, and the secondary winding portions S3, S4 and S5 are wound on the second winding pillar 15. In the staggered winding manner shown in FIG. 4B, the primary winding portions P1, P3 and P5 are wound on the first winding pillar 13, and the primary winding portions P2 and P4 are wound on the second winding pillar 15; the secondary winding portions S1, S3 and S5 are wound on the second winding pillar 15, and the secondary winding portions S2 and S4 are wound on the first winding pillar 13.

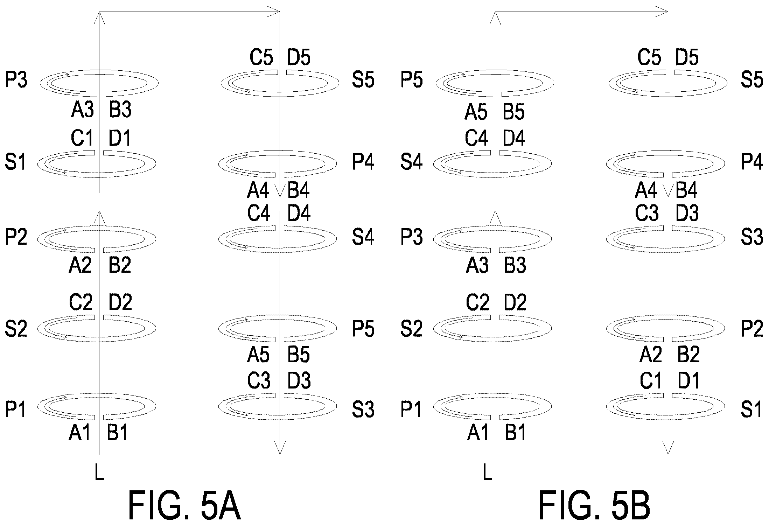

FIG. 5A and FIG. 5B schematically show winding directions of the primary and secondary windings in FIG. 4A and FIG. 4B respectively. In FIG. 5A and FIG. 5B, each winding portion has a first terminal and a second terminal. A1, A2, A3, A4 and A5 represent the first terminals of the primary winding portions P1, P2, P3, P4 and P5 respectively, and B1, B2, B3, B4 and B5 represent the second terminals of the primary winding portions P1, P2, P3, P4 and P5 respectively. C1, C2, C3, C4 and C5 represent the first terminals of the secondary winding portions S1, S2, S3, S4 and S5 respectively, and D1, D2, D3, D4 and D5 represent the second terminals of the secondary winding portions S1, S2, S3, S4 and S5 respectively. For each winding portion, the first terminal thereof is coupled to the second terminal of the preceding winding portion, and the second terminal thereof is coupled to the first terminal of the succeeding winding portion. In particular, regarding the primary winding portions P1, P2, P3, P4 and P5 of the primary winding, A1, B1, A2, B2, A3, B3, A4, B4, A5, and B5 are coupled sequentially; regarding the secondary winding portions S1, S2, S3, S4 and S5 of the secondary winding, C1, D1, C2, D2, C3, D3, C4, D4, C5, and D5 are coupled sequentially.

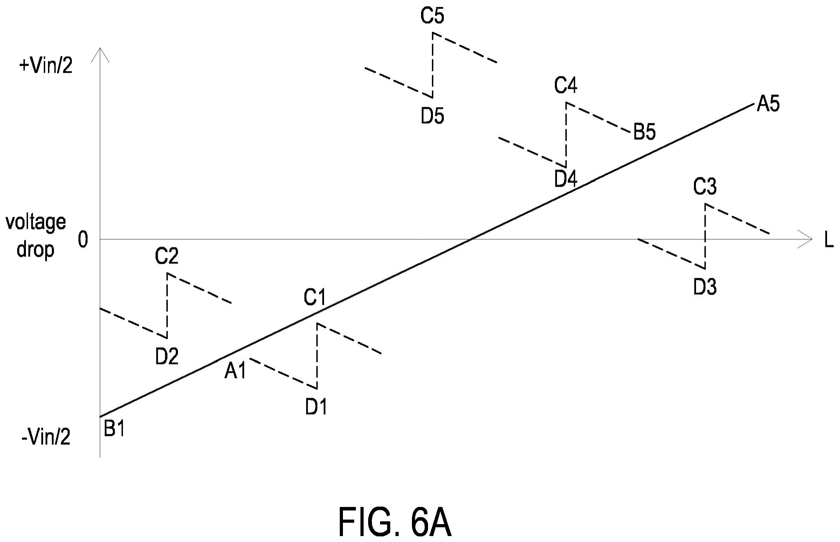

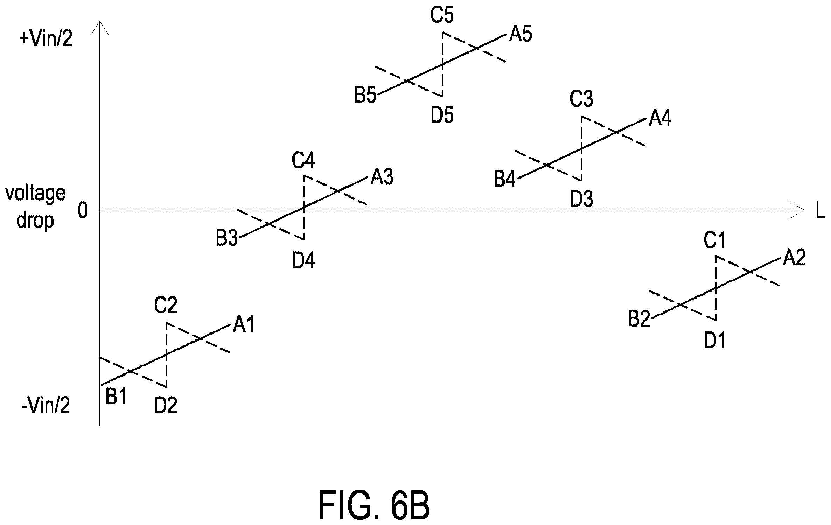

FIG. 6A schematically shows the voltage distribution of the primary and secondary windings arranged in the conventional sequential winding manner shown in FIG. 4A. FIG. 6B schematically shows the voltage distribution of the primary and secondary windings arranged in the staggered winding manner shown in FIG. 4B. In FIG. 6A and FIG. 6B, Vin represents the input voltage, which is a DC voltage in the embodiment, received by the primary circuit 2 connected to the integrated transformer 1, and L represents the winding length traversed from one end of the primary winding Wp to the other. For example, each primary winding portion is wound with starting at the second terminal and ending at the first terminal, and the distances from two terminals of each secondary winding portion to the origin of the primary winding are regarded as the same. Further, the voltage distribution of the primary winding is depicted by solid lines, and the voltage distribution of the secondary winding is depicted by dashed lines. As shown in FIG. 6A and FIG. 6B, compared with the conventional sequential winding manner, the voltage drop between the adjacent winding portions in the staggered winding manner is smaller, namely the voltage difference induced between the primary and secondary windings Wp and Ws arranged in the staggered winding manner is smaller. Consequently, the staggered winding manner achieves better winding voltage distribution. Further, the anti-resonance effect is reduced.

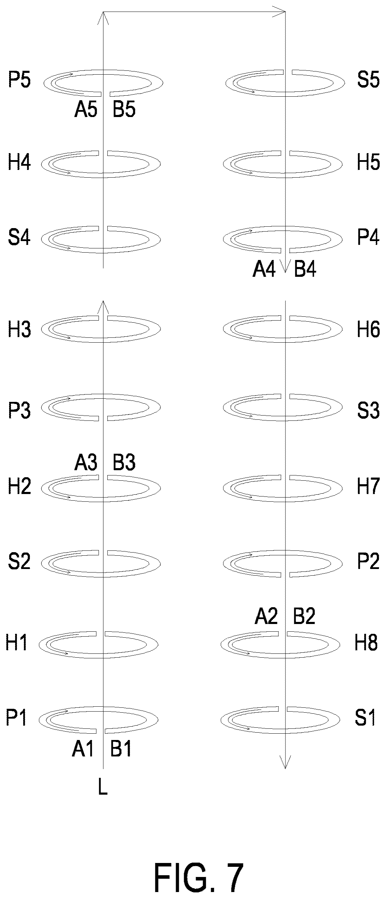

FIG. 7 schematically shows the primary, secondary and shielding windings arranged in a staggered winding manner. As shown in FIG. 7, the shielding winding Wh includes a plurality of shielding winding portions, each disposed between the adjacent primary and secondary winding portions. In this embodiment, the shielding winding Wh includes eight shielding winding portions H1, H2, H3, H4, H5, H6, H7 and H8. The shielding winding portion H1 is disposed between the primary winding portion P1 and the secondary winding portion S2, the shielding winding portion H2 is disposed between the primary winding portion P3 and the secondary winding portion S2, the shielding winding portion H3 is disposed between the primary winding portion P3 and the secondary winding portion S4, and the shielding winding portion H4 is disposed between the primary winding portion P5 and the secondary winding portion S4. The shielding winding portion H5 is disposed between the primary winding portion P4 and the secondary winding portion S5, the shielding winding portion H6 is disposed between the primary winding portion P4 and the secondary winding portion S3, the shielding winding portion H7 is disposed between the primary winding portion P2 and the secondary winding portion S3, and the shielding winding portion H8 is disposed between the primary winding portion P2 and the secondary winding portion S1.

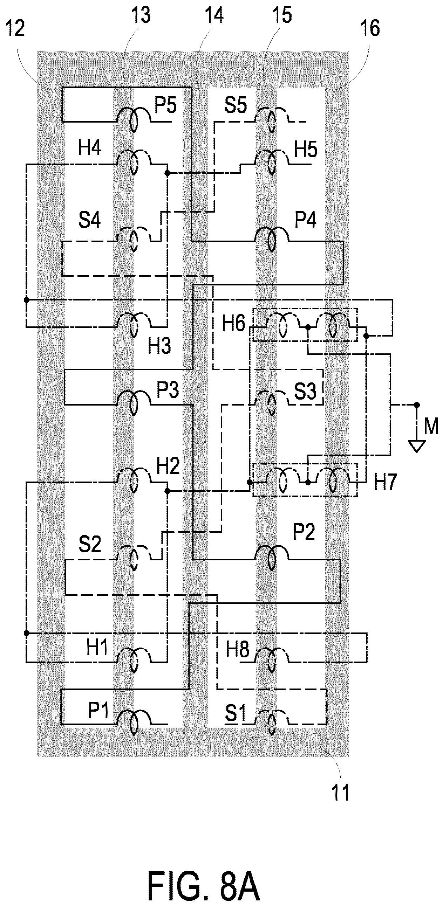

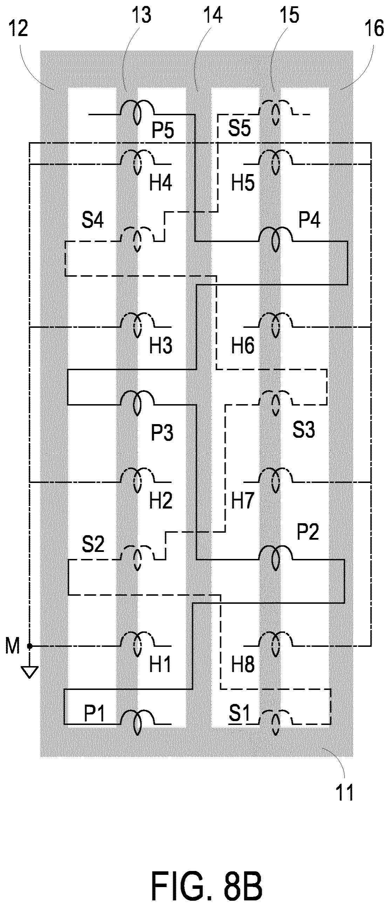

It is noted that the shielding winding portions H1, H2, H3, H4, H5, H6, H7 and H8 may adopt series connection or parallel connection. FIG. 8A schematically shows the primary, secondary and shielding windings of FIG. 7 wound on the magnetic core with the shielding winding portions adopting series connection. FIG. 8B schematically shows the primary, secondary and shielding windings of FIG. 7 wound on the magnetic core with the shielding winding portions adopting parallel connection. The shielding winding portions H1, H2, H3 and H4 are wound on the first winding pillar 13, and the shielding winding portions H5, H6, H7 and H8 are wound on the second winding pillar 15.

In the embodiment shown in FIG. 8A, the shielding winding portions H8, H2, H6, H4 and H5 are electrically connected in series sequentially, the shielding winding portion H1 is electrically connected in parallel to the shielding winding portion H2, the shielding winding portion H7 is electrically connected in parallel to the shielding winding portion H6, and the shielding winding portion H3 is electrically connected in parallel to the shielding winding portion H4. Moreover, a midpoint of the shielding winding portion H6 and a midpoint of the shielding winding portion H7 are electrically connected to a DC midpoint M. More generally, two shielding winding portions at two sides of each secondary winding portion are electrically connected in parallel to form a branch, and the first shielding winding portion, all the branches, and the last shielding winding portion are electrically connected in series. Further, in the branch formed by two shielding winding portions at two sides of the middle secondary winding portion (e.g., the secondary winding portion S3 in FIG. 8A), the midpoint of each shielding winding portion is electrically connected to the DC midpoint M.

In the embodiment shown in FIG. 8B, one terminal of each of the shielding winding portions H1, H2, H3, H4, H5, H6, H7 and H8 is electrically connected to the DC midpoint M.

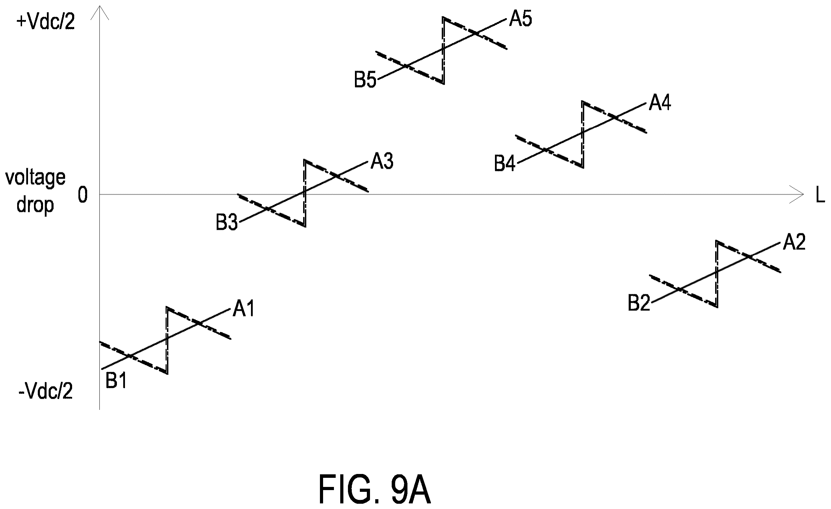

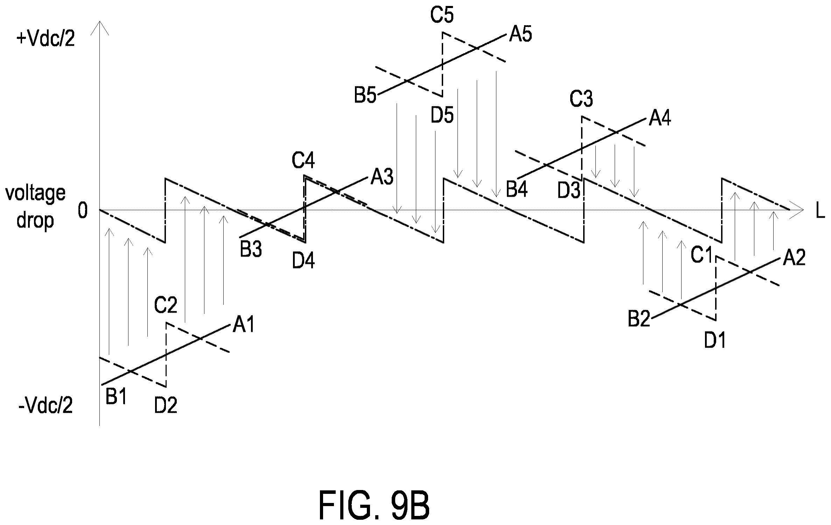

FIG. 9A schematically shows the voltage distribution of the primary, secondary and shielding windings shown in FIG. 8A. FIG. 9B schematically shows the voltage distribution of the primary, secondary and shielding windings shown in FIG. 8B. In FIG. 9A and FIG. 9B, the voltage distribution of the shielding winding is depicted by chain lines. It is noted that the voltage distribution of the primary and second windings are actually the same as that shown in FIG. 6B. When the shielding winding portions adopt series connection, as shown in FIG. 9A, the voltage distribution of the shielding winding would be the same as the voltage distribution of the secondary winding. Accordingly, the noise would circulate between the secondary winding and the shielding winding. When the shielding winding portions adopt parallel connection, as shown in FIG. 9B, the parallel connection of the shielding winding portions would lead to shunting effect (shown by arrow lines) of the common mode currents and provides higher attenuation compared to the series connection of the shielding winding portions.

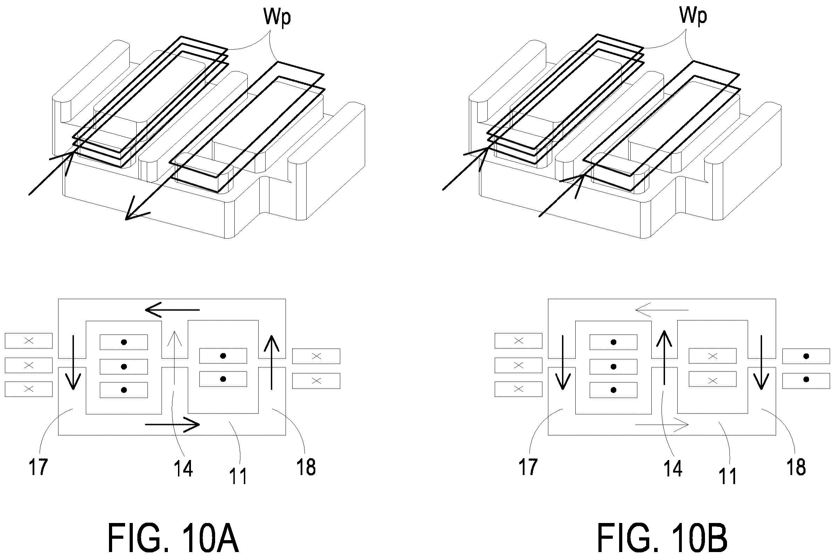

In addition, as mentioned above, the primary winding Wp is wound on the third and fourth winding pillars 17 and 18 of the magnetic core 10 to form integrated DM inductors Ldm1 and Ldm2 and integrated CM inductors Lcm1 and Lcm2. FIG. 10A schematically shows the direction of the DM current flowing through the primary winding and the flux patterns. FIG. 10B schematically shows the direction of the CM current flowing through the primary winding and the flux patterns. The DM flux, as shown in FIG. 10A, mostly localizes through the third and fourth winding pillars 17 and 18 with some leakage to the middle pillar 14. While the CM flux, as shown in FIG. 10B, mostly localizes through the middle pillar 14 with some leakage to the third and fourth winding pillars 17 and 18.

The proposed integrated transformer 1 of the present disclosure is demonstrated using a black box model. In the black box model, the primary and secondary windings are modeled as separate nets with their mutual and self-capacitive and inductive couplings obtained using a 3D FEA (finite element analysis) simulation tool. Thereafter, the equivalent lumped model is developed to represent these parameters in the form of an RLGC matrix.

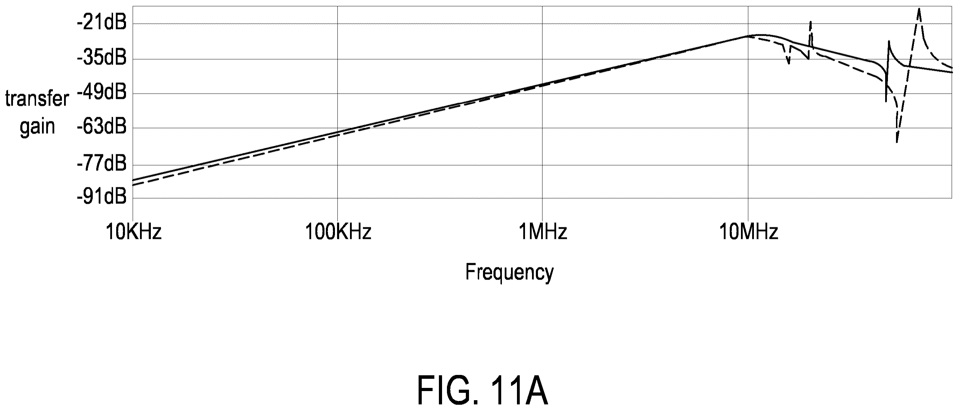

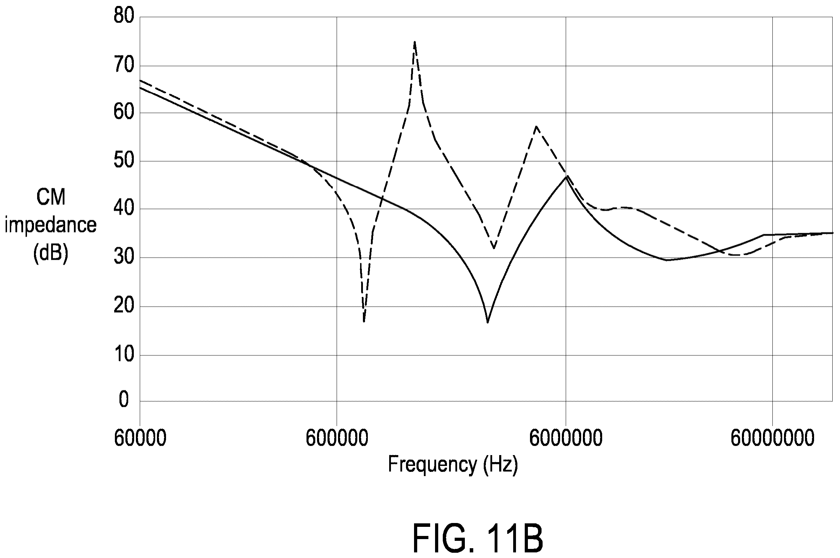

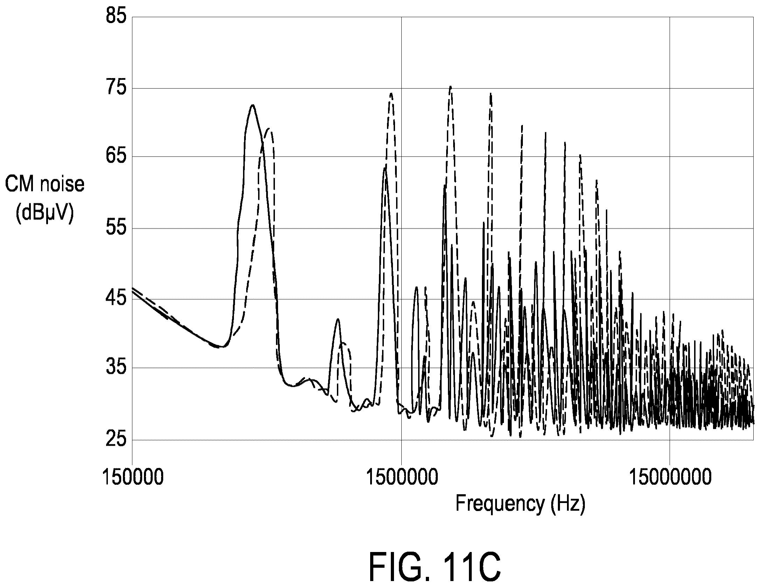

FIG. 11A schematically shows the comparison of transfer gains of the embodiments shown in FIG. 4A and FIG. 4B. FIG. 11B schematically shows the comparison of CM impedances of the embodiments shown in FIG. 4A and FIG. 4B. FIG. 11C schematically shows the comparison of CM noises of the embodiments shown in FIG. 4A and FIG. 4B. In FIG. 11A, FIG. 11B and FIG. 11C, the waveforms of the embodiment shown in FIG. 4A are depicted by dashed lines, and the waveforms of the embodiment shown in FIG. 4B are depicted by solid lines.

**EP 4 718 700 A1**

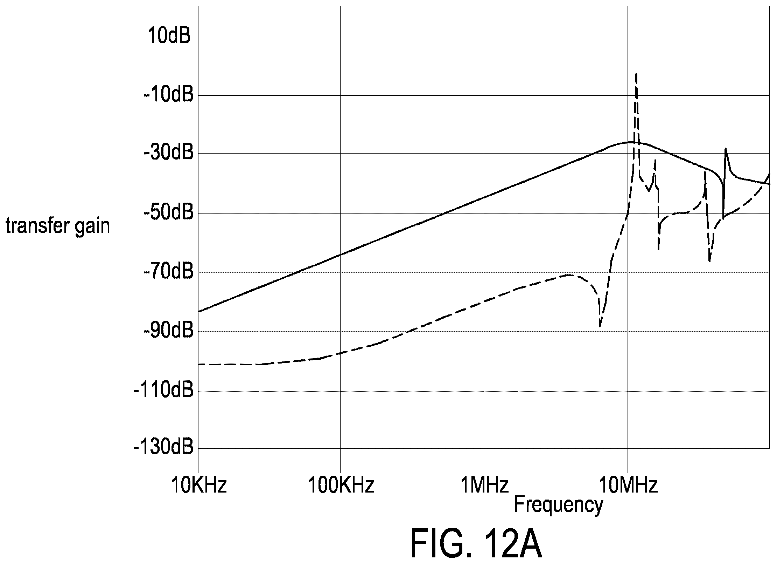

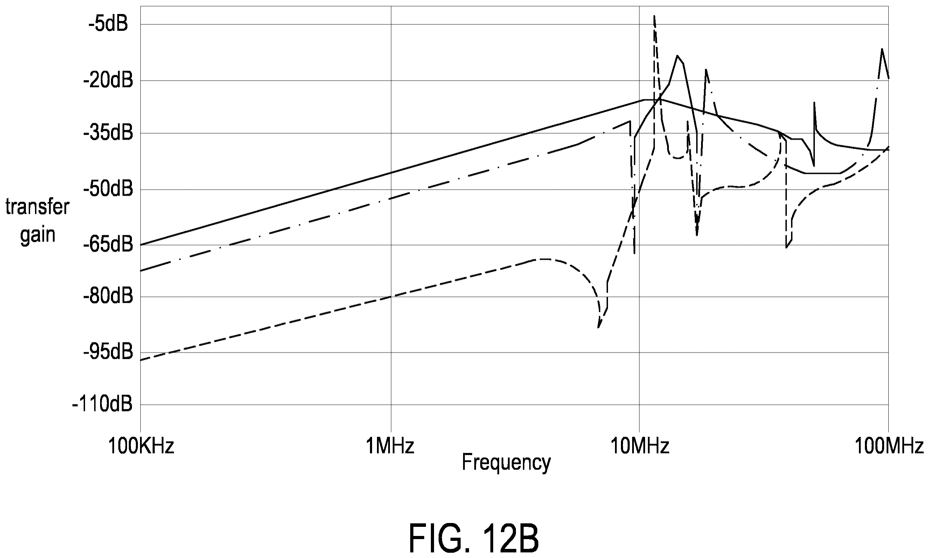

FIG. 12A schematically shows the comparison of transfer gains of the embodiments shown in FIG. 4B and FIG. 8B. FIG. 12B schematically shows the comparison of transfer gains of the embodiments shown in FIG. 4B, FIG. 8A, and FIG. 8B. In FIG. 12A and FIG. 12B, the waveforms of the embodiment shown in FIG. 4B are depicted by solid lines, the waveforms of the embodiment shown in FIG. 8B are depicted by dashed lines, and the waveforms of the embodiment shown in FIG. 8A are depicted by chain lines.

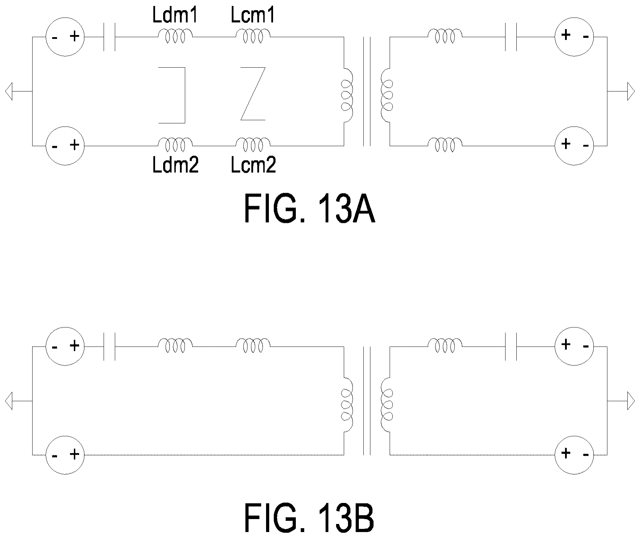

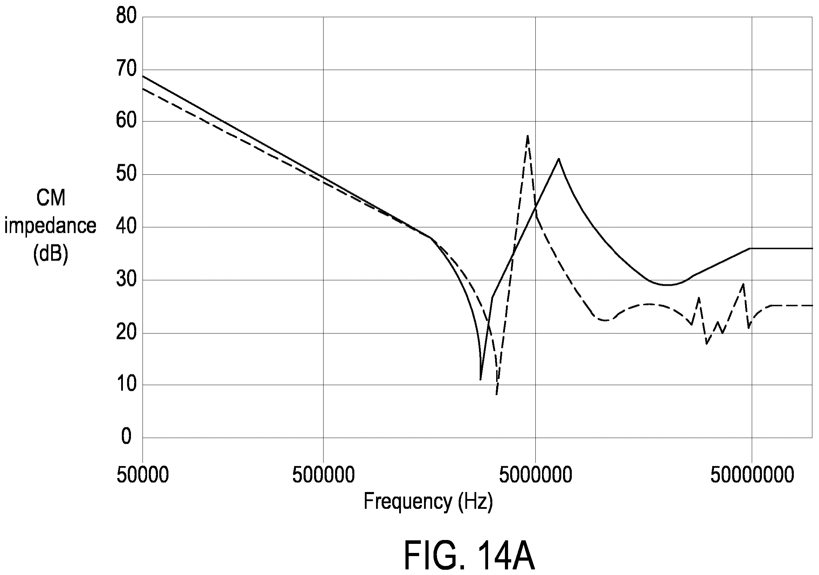

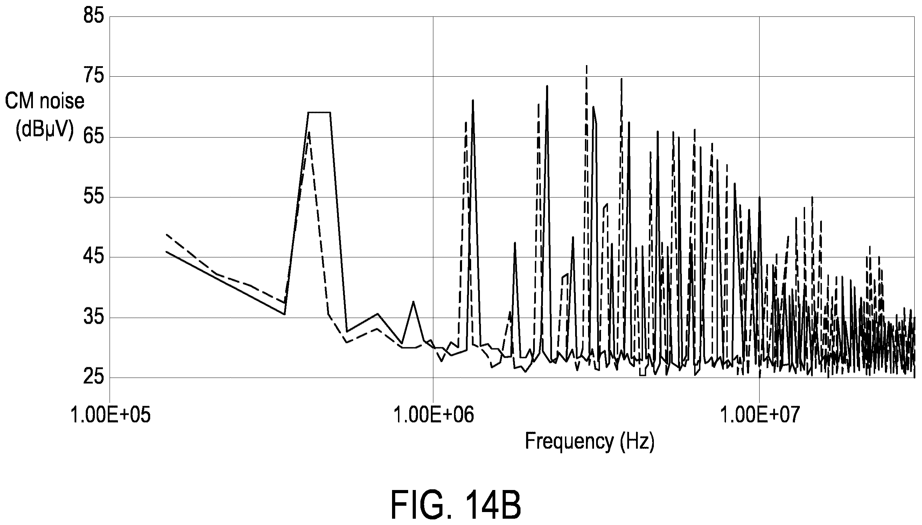

FIG. 13A schematically shows the proposed integrated transformer structure of the present application. It is noted that in this embodiment, the primary winding forms the baby inductors including the integrated DM inductors Ldm1 and Ldm2 and the integrated CM inductors Lcm1 and Lcm2. In FIG. 13A, the inductors at the secondary side represent the integrated leakage inductances. FIG. 13B schematically shows a conventional transformer structure. FIG. 14A schematically shows the comparison of CM impedances of the embodiments shown in FIG. 13A and FIG. 13B. FIG. 14B schematically shows the comparison of CM noises of the embodiments shown in FIG. 13A and FIG. 13B. In FIG. 14A and FIG. 14B, the waveforms of the embodiment shown in FIG. 13A are depicted by solid lines, and the waveforms of the embodiment shown in FIG. 13B are depicted by dashed lines.

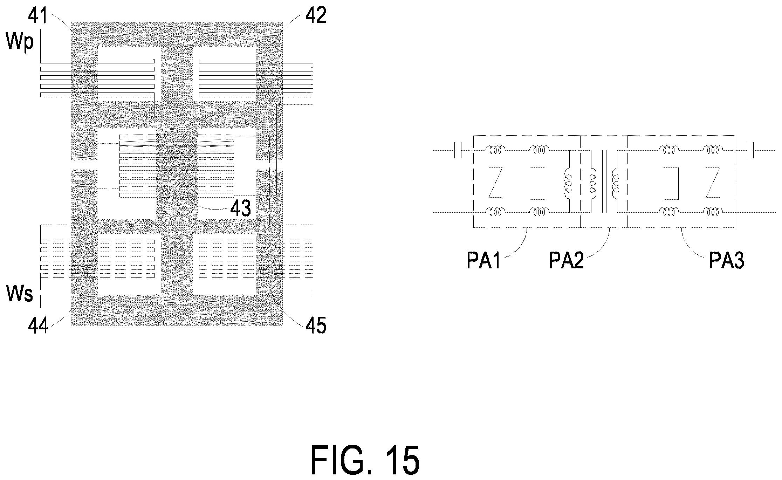

FIG. 15 is a schematic view illustrating a structure and a corresponding equivalent circuit of an integrated transformer according to another embodiment of the present disclosure. In FIG. 15, the primary winding Wp is depicted by solid lines and blocks, and the secondary winding Ws is depicted by dashed lines and blocks. As shown in FIG. 15, the magnetic core includes winding pillars 41, 42, 43, 44 and 45 disposed between plates. The primary winding Wp is wound on the winding pillars 41 and 42 to form the first part PA1, including DM and CM inductors, of the integrated transformer. The primary winding Wp and the secondary winding Ws are wound on the winding pillar 43 with being interleaved with each other to form the second part PA2 of the integrated transformer. The secondary winding Ws is wound on the winding pillars 44 and 45 to form the third part PA3, including DM and CM inductors, of the integrated transformer. In an embodiment, there may be air gaps on the winding pillars.

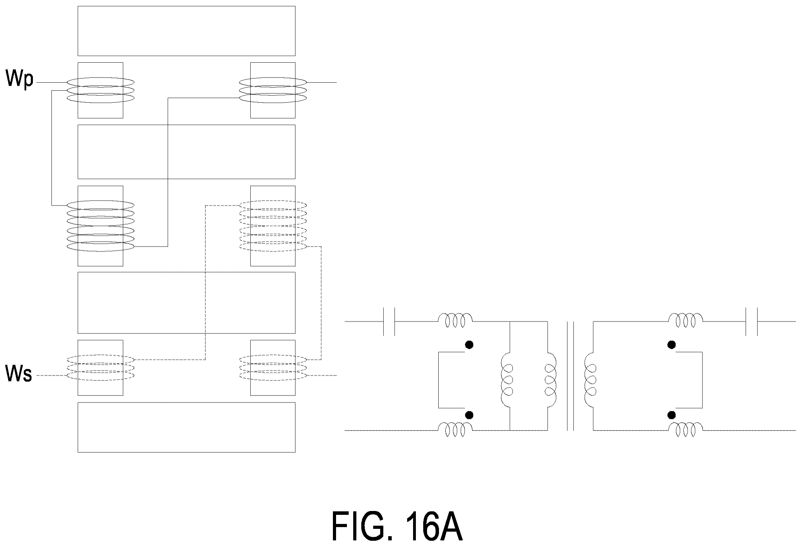

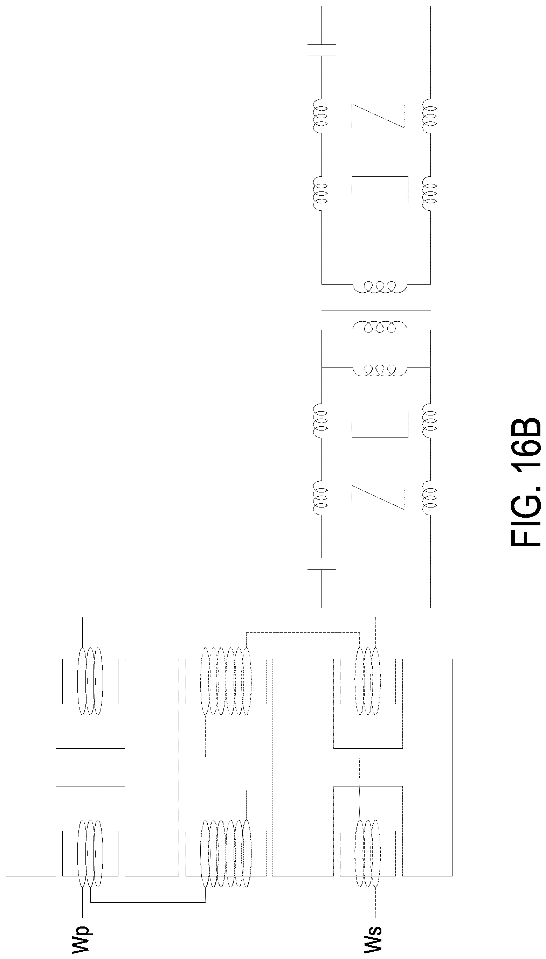

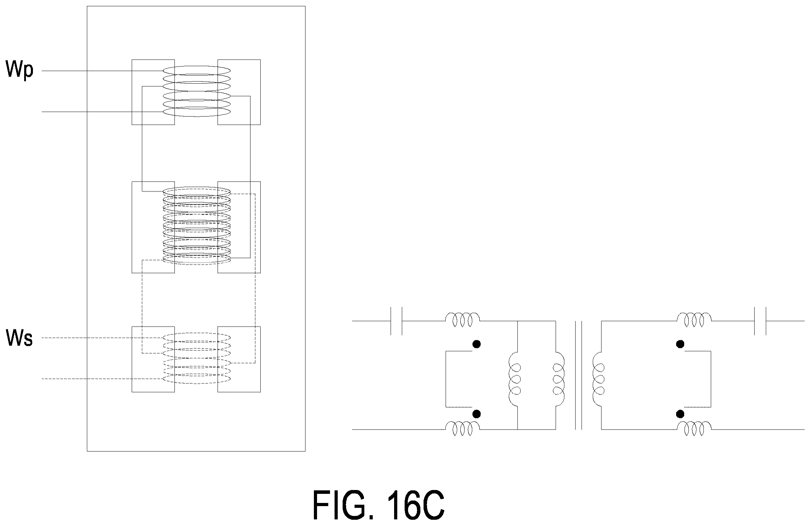

In the present disclosure, the possible magnetic core shape and the corresponding winding manner are not limited to that shown in FIG. 15. For example, FIG. 16A, FIG. 16B and FIG. 16C schematically show different structures and corresponding equivalent circuits of the integrated transformer according to different embodiments of the present disclosure. In FIG. 16A, FIG. 16B and FIG. 16C, the primary winding Wp is depicted by solid lines, and the secondary winding Ws is depicted by dashed lines. For example, the magnetic core may adopt UU cores, as shown in FIG. 16A. Alternatively, the magnetic core may adopt EE/EI cores, as shown in FIG. 16B and FIG. 16C.

In isolated power converters, CM (common mode) noise currents are generated due to parasitic capacitances between the primary and secondary circuits. These CM currents, if not properly managed, contribute significantly to both conducted and radiated electromagnetic interference (EMI). In many conventional designs, there is no dedicated path to circulate the high-frequency CM currents between the two sides of the isolation stage. As a result, the noise couples to external lines and propagates through the system, making it difficult for the converter to comply with EMI standards. To mitigate this problem, bulky common mode chokes and multi-stage filters are often employed, which increases cost, board area, and design complexity. These drawbacks highlight the limitations of current practices, which struggle to achieve effective EMI suppression while maintaining safety, efficiency, and integration requirements.

Therefore, a local ground shielding technique is proposed in the present disclosure to overcome the drawbacks of these conventional technologies.

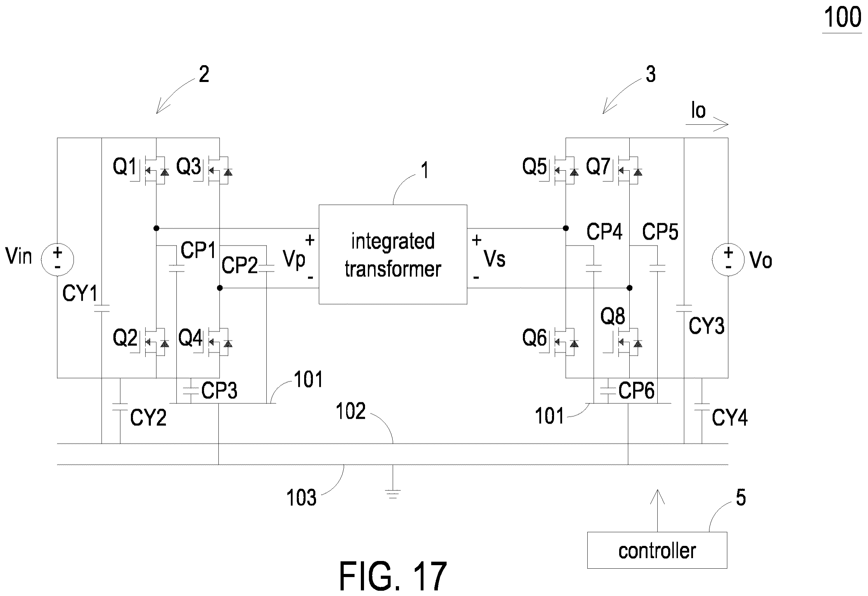

FIG. 17 is a schematic circuit diagram illustrating a resonant converter according to an embodiment of the present disclosure. In the embodiment, the resonant converter 100 may be an isolated DC-DC resonant converter, and the integrated transformer 1 of the resonant converter 100 may be formed according to the above embodiments. As shown in FIG. 17, in the resonant converter 100, the primary circuit 2 includes primary switches Q1, Q2, Q3 and Q4, and has a positive line and a negative line electrically connected to the positive and negative terminals of input voltage Vin respectively. The primary switches Q1 and Q2 are electrically connected in series to form a first bridge arm, the primary switches Q3 and Q4 are electrically connected in series to form a second bridge arm, and the first and second bridge arms are electrically connected in parallel and are both connected between the positive and negative lines. The midpoint of the first bridge arm (i.e., the connection point of primary switches Q1 and Q2) and the midpoint of the second bridge arm (i.e., the connection point of primary switches Q3 and Q4) are electrically connected to the integrated transformer 1. Similarly, the secondary circuit 3 includes secondary switches Q5, Q6, Q7 and Q8, and has a positive line and a negative line electrically connected to the positive and negative terminals of output voltage Vo respectively. The secondary switches Q5 and Q6 are electrically connected in series to form a third bridge arm, the secondary switches Q7 and Q8 are electrically connected in series to form a fourth bridge arm, and the third and fourth bridge arms are electrically connected in parallel and are both connected between the positive and negative lines. The midpoint of the third bridge arm (i.e., the connection point of secondary switches Q5 and Q6) and the midpoint of the fourth bridge arm (i.e., the connection point of primary switches Q7 and Q8) are electrically connected to the integrated transformer 1. In addition, the resonant converter 100 further includes a controller 5. The controller 5 is electrically connected to the primary and secondary switches of the primary circuit 2 and secondary circuit 3, and is configured to provide control signals for the primary and secondary switches according to the input voltage Vin, the output voltage Vo, and an output current Io.

In the embodiment, the resonant converter 100 further includes a heatsink 101 and a local ground 102. The resonant converter 100 includes Y capacitors CY1, CY2, CY3 and CY4, each coupled between the positive or negative line of the primary circuit 2 or the secondary circuit 3 and the local ground 102. In specific, the Y capacitor CY1 is coupled between the positive line of the primary circuit 2 and the local ground 102, the Y capacitor CY2 is coupled between the negative line of the primary circuit 2 and the local ground 102, the Y capacitor CY3 is coupled between the positive line of the secondary circuit 3 and the local ground 102, and the Y capacitor CY4 is coupled between the negative line of the secondary circuit 3 and the local ground 102. The local ground 102 serves as a low-impedance path and also provides the galvanic isolation through the Y capacitors. Additionally, the resonant converter 100 includes parasitic capacitances CP1, CP2, CP3, CP4, CP5 and CP6, each coupled between the AC or DC node of the primary circuit 2 or the secondary circuit 3 and the heatsink 101, and the heatsink 101 is connected to a chassis ground 103. In specific, the parasitic capacitance CP1 is coupled between the midpoint of the first bridge arm of the primary circuit 2 and the heatsink 101, the parasitic capacitance CP2 is coupled between the midpoint of the second bridge arm of the primary circuit 2 and the heatsink 101, and the parasitic capacitance CP3 is coupled between the negative line of the primary circuit 2 and the heatsink 101. Similarly, the parasitic capacitance CP4 is coupled between the midpoint of the third bridge arm of the secondary circuit 3 and the heatsink 101, the parasitic capacitance CP5 is coupled between the midpoint of the fourth bridge arm of the secondary circuit 3 and the heatsink 101, and the parasitic capacitance CP6 is coupled between the negative line of the secondary circuit 3 and the heatsink 101. In an embodiment, the parasitic capacitance is relatively small, and thus most of the CM currents may flow through the Y capacitors.

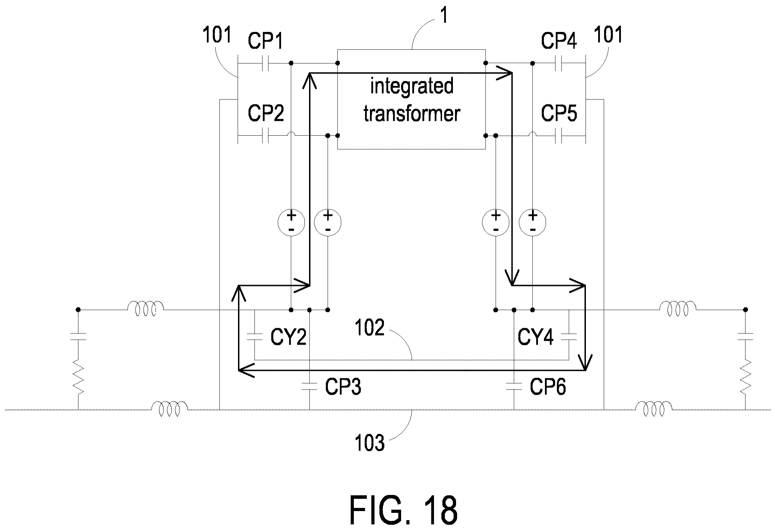

FIG. 18 schematically shows a CM equivalent circuit of the resonant converter of FIG. 17. As shown in FIG. 18, through the local ground 102 and the Y capacitors CY2 and CY4, the CM noise currents (depicted by arrows lines in the figure) would circulate between the primary circuit 2 and the secondary circuit 3 (i.e., the primary and secondary sides of the isolation stage). It is noted that the CM noise currents may also circulate between the primary circuit 2 and the secondary circuit 3 through the local ground 102 and the Y capacitors CY1 and CY3. In other words, the effect of circulating the CM noise currents between the primary circuit 2 and the secondary circuit 3 may be realized through disposing the local ground 102 and disposing the Y capacitors between the positive line and/or the negative line and the local ground 102. Accordingly, the high-frequency noise emission is suppressed. It is noted that the capacitance of the Y capacitor may affect the magnitude of circulated CM noise currents and thus affect the effect of suppressing the high-frequency noise emission. In addition, the other components disposed between the negative line and the chassis ground 103 are used for line impedance stabilization.

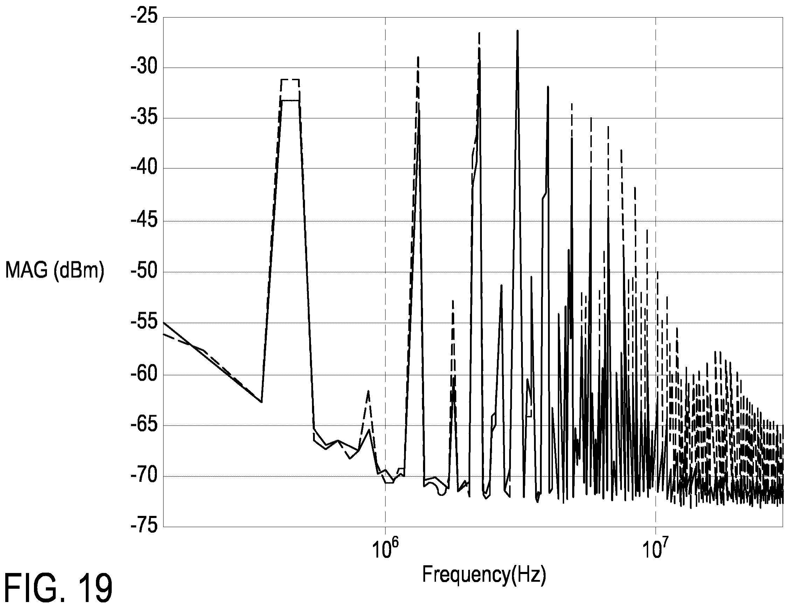

FIG. 19 schematically shows conducted emissions test results with and without the local ground scheme (i.e., disposing the local ground 102 and corresponding Y capacitors) of the present disclosure. The conducted emissions test is a type of EMI/EMC test used to check whether electronic equipment conducts unwanted high-frequency noise (e.g., EMI) through power lines or signal lines into the power grid or other devices. In FIG. 19, the conducted emissions test result with the local ground scheme is depicted by solid lines, the conducted emissions test result without the local ground scheme is depicted by dashed lines, and MAG represents the absolute power expressed in logarithmic scale. As shown in FIG. 19, with the local ground scheme, the noise at high frequency (greater than about 5 MHz) is reduced for 10 dB to 20 dB. Consequently, the high-frequency noise is reduced.

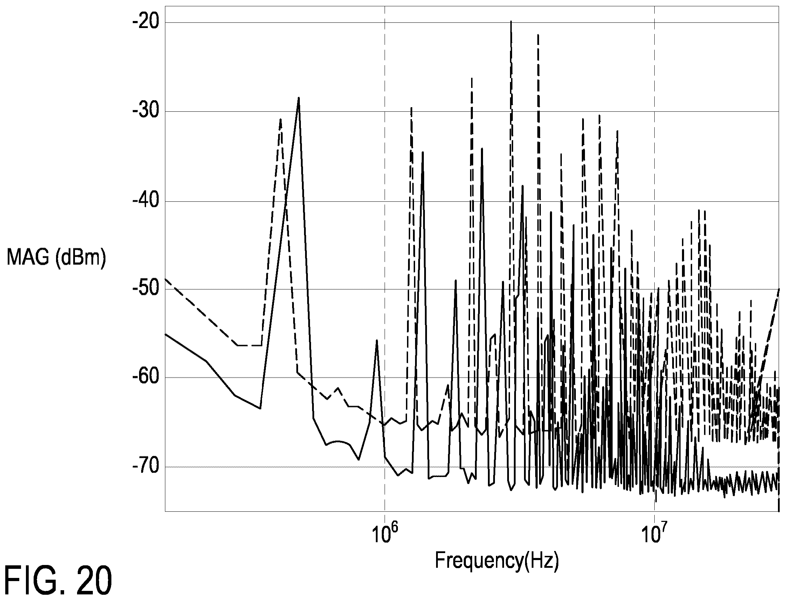

FIG. 20 schematically shows conducted emissions test results with and without the proposed magnetic integration scheme and the local ground scheme of the present disclosure. In FIG. 20, the conducted emissions test result with the proposed magnetic integration scheme (e.g., the integrated transformer 1 shown in FIG. 1) and the local ground scheme is depicted by solid lines, and the conducted emissions test result without the proposed magnetic integration scheme (e.g., the conventional transformer shown in FIG. 13B) and the local ground scheme is depicted by dashed lines. Since these two proposed schemes, namely the proposed magnetic integration and the local ground, are decoupled, the effect of each scheme is an additional attenuation in the spectrum, and these two proposed schemes do not compete with each other. As shown in FIG. 20 in conjunction with FIG. 19, with the proposed magnetic integration scheme, the effect of reducing the high-frequency noise is further enhanced.

In resonant DC-DC power converters, variable frequency control is commonly employed to achieve high-efficiency energy conversion and zero-voltage switching (ZVS). By adjusting the switching frequency, the converter can adapt to varying load conditions and operating modes. However, despite these advantages, such converters often suffer from excessive electromagnetic interference (EMI), particularly conducted emissions, which may exceed regulatory limits and pose challenges for electromagnetic compatibility.

A widely used solution for reducing EMI is the implementation of spread spectrum techniques, which disperse the spectral energy over a wider frequency range to reduce peak emissions. These techniques have been proven effective in hard-switching converters such as buck converters. However, their direct application to resonant converters introduces several issues. For example, the absence of proper timing compensation may result in noticeable fluctuations in output voltage, making it difficult to maintain a stable voltage gain. In addition, failure to simultaneously consider the switching dynamics of both primary and secondary side switches may compromise the ZVS condition, degrading efficiency and reliability. Furthermore, many conventional approaches are limited to a single mode of operation (e.g., buck mode), making them unsuitable for resonant converters capable of operating in multiple modes such as buck, boost, and DC transformer (DCX) modes.

Therefore, a software-based technique of spread spectrum scheme is proposed in the present disclosure to overcome the drawbacks of these conventional technologies.

In the spread spectrum scheme of the present disclosure, a frequency perturbation injection with simultaneous phase compensation is proposed to minimize conducted and radiated emissions peak value. The proposed phase compensation is used to dynamically adjust the voltage gain of the resonant converter to be constant with the changing (dithered) switching frequency. The detailed descriptions for the spread spectrum scheme are provided as follows.

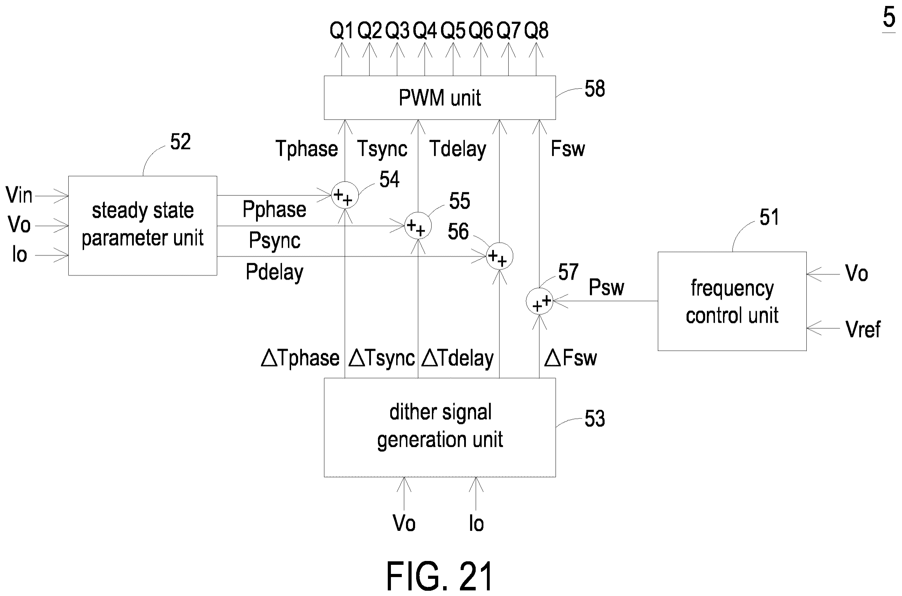

FIG. 21 is a schematic block diagram illustrating the controller of the resonant converter shown in FIG. 17. Please refer to FIG. 21 in conjunction with FIG. 17. The controller 5 injects frequency perturbation into the switching frequency to realize spread spectrum, namely transforming from a narrow band spectrum to a broad band spectrum. The spread spectrum helps by dispersing energy over a wider frequency range, which reduces peak EMI levels and makes it easier to meet EMC requirements. The spread spectrum also minimizes interference with other devices, improves noise immunity in communication systems, and enhances signal security. Since the voltage gain may vary with the dithered switching frequency, the controller 5 simultaneously utilizes the phase compensation to make the voltage gain stable. In other words, the switching frequency dithers with a first variation, and the controller 5 controls the primary and secondary switches to operate with phase parameter(s) dithering with a second variation, which is corresponding to the first variation, to offset the impact of the dithering switching frequency on the voltage gain and make the voltage gain stable.

In particular, the controller 5 includes a frequency control unit 51, a steady state parameter unit 52, a dither signal generation unit 53, plural adders 54, 55, 56 and 57, and a PWM unit 58. The frequency control unit 51 is configured to determine a switching frequency parameter Psw according to the output voltage Vo and a reference voltage Vref. The steady state parameter unit 52 is configured to determine phase parameters under steady state. For example, according to the input voltage Vin, the output voltage Vo and the output current Io, the steady state parameter unit 52 determines a phase shift time parameter Pphase, a synchronization time parameter Psync, and a delay time parameter Pdelay. The steady state parameter unit 52 may determine these parameters according to a look up table, but not limited thereto. The dither signal generation unit 53 is configured to generate dither signals for the switching frequency parameter and phase parameters. For example, according to the output voltage Vo and the output current Io, the dither signal generation unit 53 generates a phase shift time dither signal ΔTphase, a synchronization time dither signal ΔTsync, a delay time dither signal ΔTdelay, and a switching frequency dither signal ΔFsw. The dither signal generation unit 53 may generate these dither signals according to a look up table, but not limited thereto.

Each of the adders 54, 55 and 56 is electrically connected to the steady state parameter unit 52 and the dither signal generation unit 53, and the adder 57 is electrically connected to the frequency control unit 51 and the dither signal generation unit 53. The adder 54 is configured to sum up the phase shift time parameter Pphase and the phase shift time dither signal ΔTphase to generate a phase shift time Tphase. The adder 55 is configured to sum up the synchronization time parameter Psync and the synchronization time dither signal ΔTsync to generate a synchronization time Tsync. The adder 56 is configured to sum up the delay time parameter Pdelay and the delay time dither signal ΔTdelay to generate a delay time Tdelay. The adder 57 is configured to sum up the switching frequency parameter Psw and the switching frequency dither signal ΔFsw to generate a switching frequency Fsw. The PWM unit 58 is electrically connected to the adders 54, 55, 56 and 57 for receiving the phase shift time Tphase, the synchronization time Tsync, the delay time Tdelay, and the switching frequency Fsw. According to the phase shift time Tphase, the synchronization time Tsync, the delay time Tdelay, and the switching frequency Fsw, the PWM unit 58 is configured to generate the control signals for controlling the operation of the switches of the primary circuit 2 and secondary circuit 3, including primary switches Q1, Q2, Q3 and Q4 and secondary switches Q5, Q6, Q7 and Q8.

The phase shift time Tphase represents the time of the primary switches Q1, Q2, Q3 and Q4 being maintained in an off state, the synchronization time Tsync represents the phase difference between the control signals of the primary switches Q1, Q2, Q3 and Q4 and the control signals of the secondary switches Q5, Q6, Q7 and Q8, and the delay time Tdelay represents the time of the secondary switches Q5, Q6, Q7 and Q8 being maintained in the off state. For ease of understanding, taking a primary voltage Vp provided by the primary circuit 2 and a secondary voltage Vs received by the secondary circuit 3 as an example, the phase shift time Tphase is the time of the primary voltage Vp being at zero, the synchronization time Tsync is the phase difference between the primary voltage Vp and the secondary voltage Vs, and the delay time Tdelay is the time of the secondary voltage Vs being at zero.

In an embodiment, the controller 5 may provide the control signals for primary and secondary switches according to the switching frequency Fsw and at least one of the phase shift time Tphase, the synchronization time Tsync, and the delay time Tdelay. In specific, whether the phase shift time Tphase, the synchronization time Tsync, and/or the delay time Tdelay are taken into consideration for generating the control signals depends on the work mode of the resonant converter 100, such as a buck mode, a DCX mode, or a boost mode.

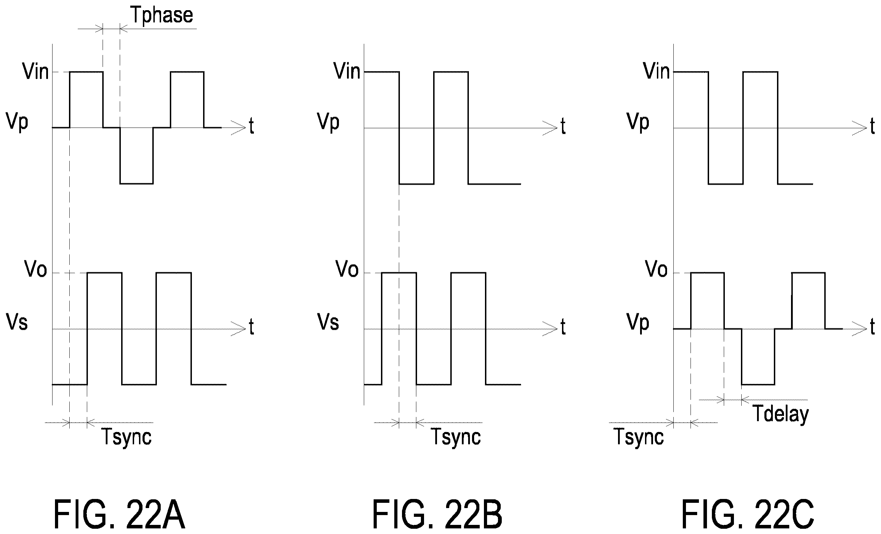

FIG. 22A schematically shows the waveforms of the primary and secondary voltages of the resonant converter operating in the buck mode and adopting the spread spectrum scheme. As shown in FIG. 22A, when the resonant converter 100 operates in the buck mode, in order to offset the impact of the dithered switching frequency on the voltage gain, the phase shift time Tphase and the synchronization time Tsync are used for the phase compensation to make the voltage gain stable.

FIG. 22B schematically shows the waveforms of the primary and secondary voltages of the resonant converter operating in the DCX mode and adopting the spread spectrum scheme. As shown in FIG. 22B, when the resonant converter 100 operates in the DCX mode, in order to offset the impact of the dithered switching frequency on the voltage gain, the synchronization time Tsync is used for the phase compensation to make the voltage gain stable.

FIG. 22C schematically shows the waveforms of the primary and secondary voltages of the resonant converter operating under the boost mode and adopting the spread spectrum scheme. As shown in FIG. 22C, when the resonant converter 100 operates in the boost mode, in order to offset the impact of the dithered switching frequency on the voltage gain, the delay time Tdelay and the synchronization time Tsync are used for the phase compensation to make the voltage gain stable.

The generation of look up tables used by the controller 5 and analyses on spectrum impact from injected dither signals are provided in the following descriptions with corresponding figures.

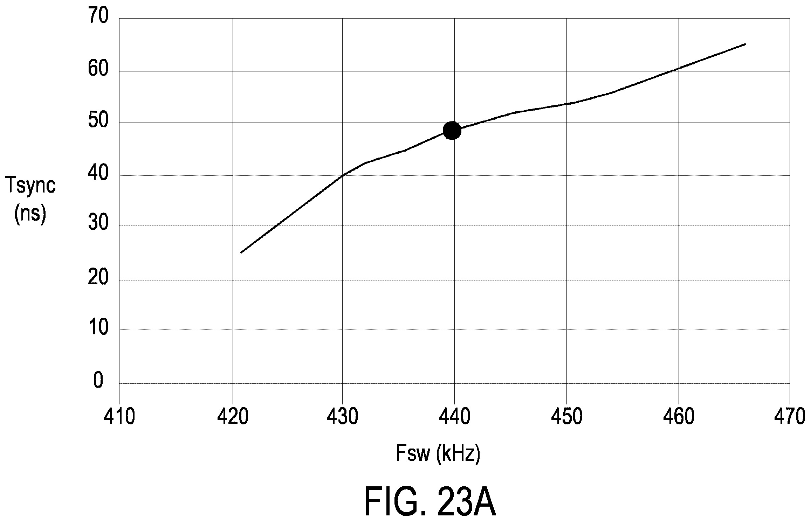

At first, the DCX mode is analyzed. FIG. 23A schematically shows the relation curve of the synchronization time and the switching frequency of the resonant converter under the DCX mode to maintain same voltage gain under spread spectrum (SS) modulation. A look up table for different possible switching frequencies Fsw and synchronization times Tsync under the DCX mode may be obtained according to the relation curve shown in FIG. 23A. As shown in FIG. 23A, when the switching frequency Fsw increases linearly, the synchronization time Tsync also increase in a linear fashion. This leads to the possibility to pick a triangular dither signal for both the switching frequency dither signal $\Delta$Fsw and the synchronization time dither signal $\Delta$Tsync.

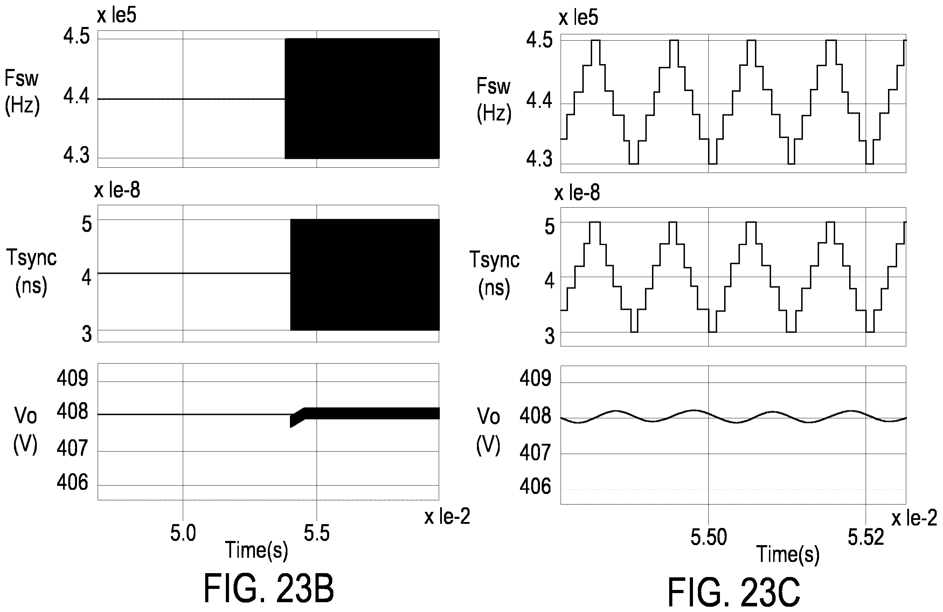

FIG. 23B schematically shows the waveforms of the switching frequency, the synchronization time, and the output voltage of the resonant converter operating in the DCX mode and adopting the spread spectrum scheme. FIG. 23C shows the waveforms of FIG. 23B during a certain period of time. As shown in FIG. 23B and FIG. 23C, the triangular dither signals for time (phase) and frequency have a positive impact on the voltage gain. While it is possible to simply add the switching frequency dither signal $\Delta$Fsw alone to the circuit, it may lead to unregulated output voltage Vo. With phase compensation (i.e., the synchronization time dither signal $\Delta$Tsync), this problem can be solved. The simulation results are performed under open loop modulation, i.e., no voltage loop controller is used for these sets of simulation results. Further, regarding the switching frequency dither signal $\Delta$Fsw in the embodiment, the injection frequency may be set to about 10 kHz while the frequency variation itself (i.e., the first variation) may be about 10 kHz as well. In some embodiments, the first variation may be in a range of approximately 5 kHz to 20 kHz, 8 kHz to 12 kHz, or 9 kHz to 11 kHz according to different kinds of needs.

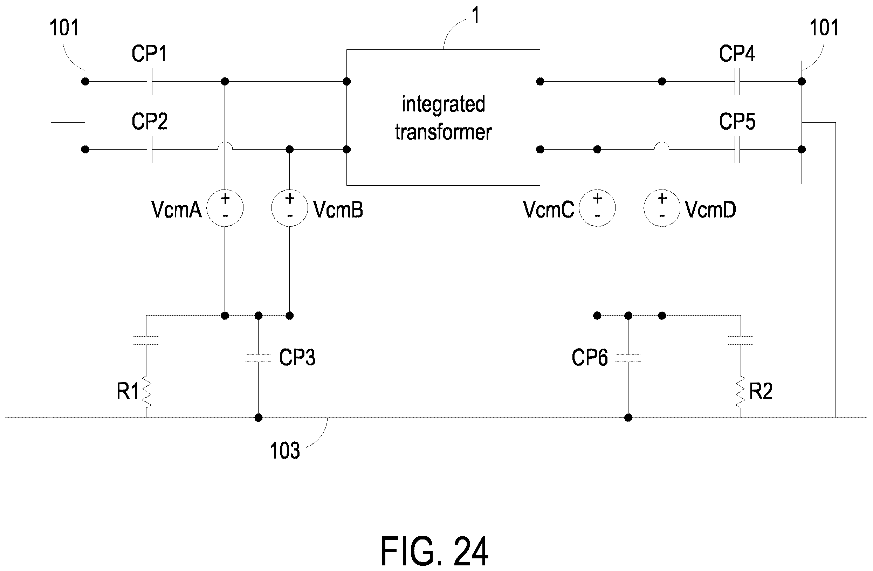

To assess the impact on noise emissions, a CM equivalent model shown in FIG. 24 (without applying the local ground scheme) is simulated. At first, excitation voltages VcmA, VcmB, VcmC and VcmD for the first to fourth bridge arms of the primary circuit 2 and secondary circuit 3 are obtained through a full system time domain simulation on the resonant converter 100 of FIG. 17. The excitation voltages VcmA, VcmB, VcmC and VcmD are fed as inputs to the CM equivalent model in FIG. 24, and the voltages across the resistors R1 and R2 (regarded as LISN (line impedance stabilization network) terminals) in FIG. 24 are measured and serve as sensing voltages. It is noted that while this technique has been demonstrated in a CM equivalent model, the same is true for DM equivalent model as well.

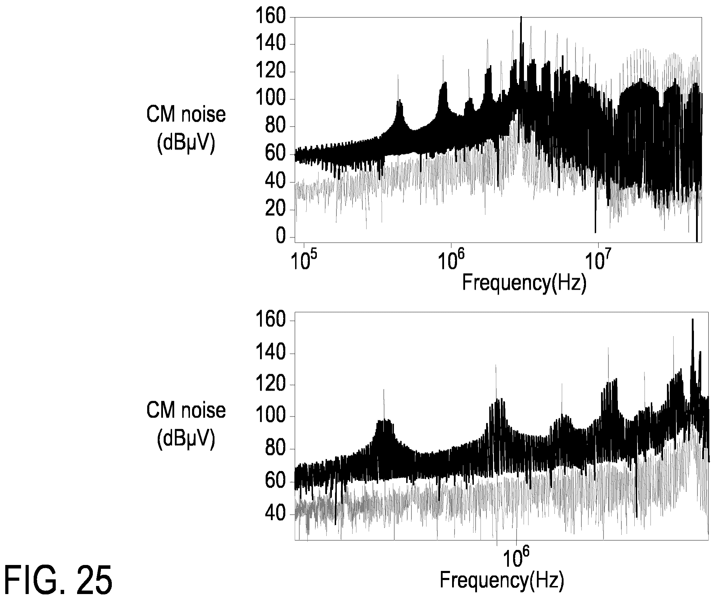

Afterwards, an FFT (Fast Fourier Transform) is performed on the measured sensing voltages, which are time domain signals, across the LISN terminals. This direct FFT leads to the spectrum as shown in FIG. 25. FIG. 25 schematically show the comparison of CM noises measured at LISN terminals of FIG. 24 with and without applying the spread spectrum scheme. In FIG. 25, the waveforms in the case without applying the spread spectrum scheme are depicted by grayer color, and the waveforms in the case with applying the spread spectrum scheme are depicted by darker color. Further, in FIG. 25, the lower oscillogram shows the waveforms within a certain range of frequency in the upper oscillogram. As shown in FIG. 25, an almost 20 dB reduction in the peak noise spectrum can be seen. Moreover, the spectrum is more spread out, transforming from a narrow band spectrum to a broad band spectrum.

In the real application, a spectrum analyzer may be used, and a realistic interpretation is possible through specific equations shown below.

It is assumed that the input signal $x_{input}(t)$ is periodic to the given time window $T_0$. 'x' can be a voltage or a current waveform input. After doing FFT, $X_{input}(kf_0)$ is obtained, where $f_0 = 1/T_0$. '$f_{center}$' is the center frequency of the RBW (resolution band-width) of the spectrum analyzer, and '$f_{eval}$' is the evaluation frequency of interest. $X_{filtered}(kf_0, f_{eval})$ is the filtered output by passing the input signal $X_{input}$ through the RBW filter function $H_{RBW}$. However, since the spectrum analyzer cares about the peak detector, the peak-filtered signal, $X_{filtered,Hilbert}$ is obtained though Hilbert transform. The total time domain filtered peak amplitude of the input signal 'x' is denoted by $x_{envelope}(t, f_{eval})$ corresponding to different evaluation frequencies $f_{eval}$. Then using the max function and FFT, the peak noise is obtained as $x_{max}(t, f_{eval})$.

$$H_{RBW}(f) = exp\left[4.\ln(0.5).\left(\frac{f - f_{center}}{RBW}\right)^2\right] \tag{1}$$

Here shows that the filtered emissions magnitude with center frequency $f_{center}$, with time period of the measured signal as $t_0$ (corresponding frequency $f_0$) at the frequency $f_{eval}$ is given by equation (2). In this mathematical solution, it is not required to use a local oscillator and a mixer to shift the input, instead the center frequency can be shifted in equation (1) to mimic the local oscillator.

$$X_{filtered}(kf_0, f_{eval}) = H_{RBW}(kf_0 - f_{eval} + f_{center}) \cdot X_{input}(kf_0) \tag{2}$$

The envelope and maximum value of the signal can be found using Hilbert transform.

$$X_{filtered,Hilbert}(kf_0, f_{eval}) = -j \cdot X_{filtered}(kf_0, f_{eval}) \tag{3}$$

$$x_{envelope}(t, f_{eval}) = \sqrt{X_{filtered}(t, f_{eval})^2 + X_{filtered,Hilbert}(t, f_{eval})^2} \tag{4}$$

$$x_{max}(t, f_{eval}) = \max|x_{envelope}(t, f_{eval})| \tag{5}$$

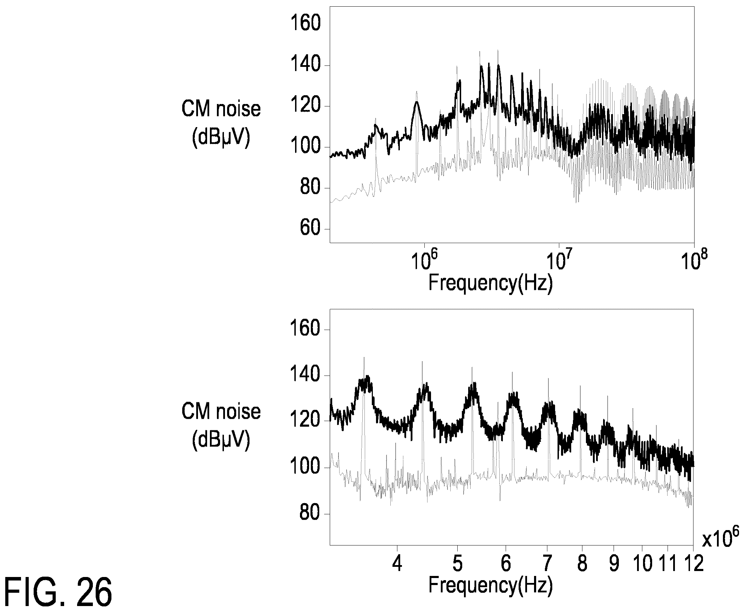

FIG. 26 schematically show the comparison of CM noises measured at LISN terminals of FIG. 24 with and without applying the spread spectrum scheme and the above mathematical solution. In FIG. 26, the waveforms in the case without applying the spread spectrum scheme are depicted by grayer color, and the waveforms in the case with applying the spread spectrum scheme and the above mathematical solution are depicted by darker color. Further, in FIG. 26, the lower oscillogram shows the waveforms within a certain range of frequency in the upper oscillogram.

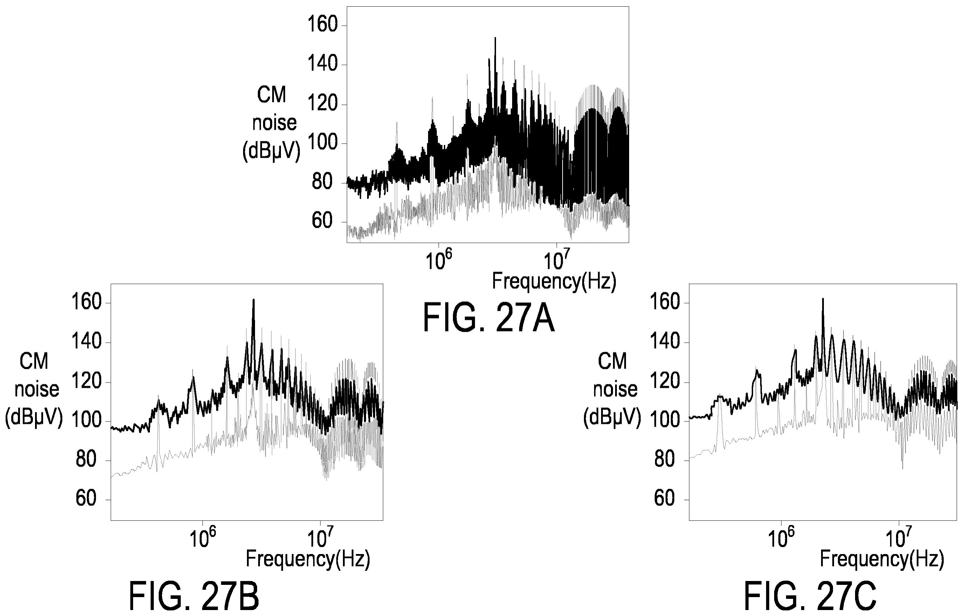

It is noted that the effect of the modulation frequency fm on the emissions given a specific RBW setting of the spectrum analyzer. FIG. 27A schematically show the comparison of CM noises with and without applying the spread spectrum scheme when the modulation frequency fm is greater than RBW. FIG. 27B schematically show the comparison of CM noises with and without applying the spread spectrum scheme when the modulation frequency fm is substantially equal to RBW. FIG. 27C schematically show the comparison of CM noises with and without applying the spread spectrum scheme when the modulation frequency fm is smaller than RBW. In FIG. 27A, FIG. 27B and FIG. 27C, the waveforms in the case without applying the spread spectrum scheme are depicted by grayer color, and the waveforms in the case with applying the spread spectrum scheme are depicted by darker color. As shown in FIG. 27A, FIG. 27B and FIG. 27C, with a higher modulation frequency fm, specifically fm > RBW, the reduction in peak noise emissions is more obvious.

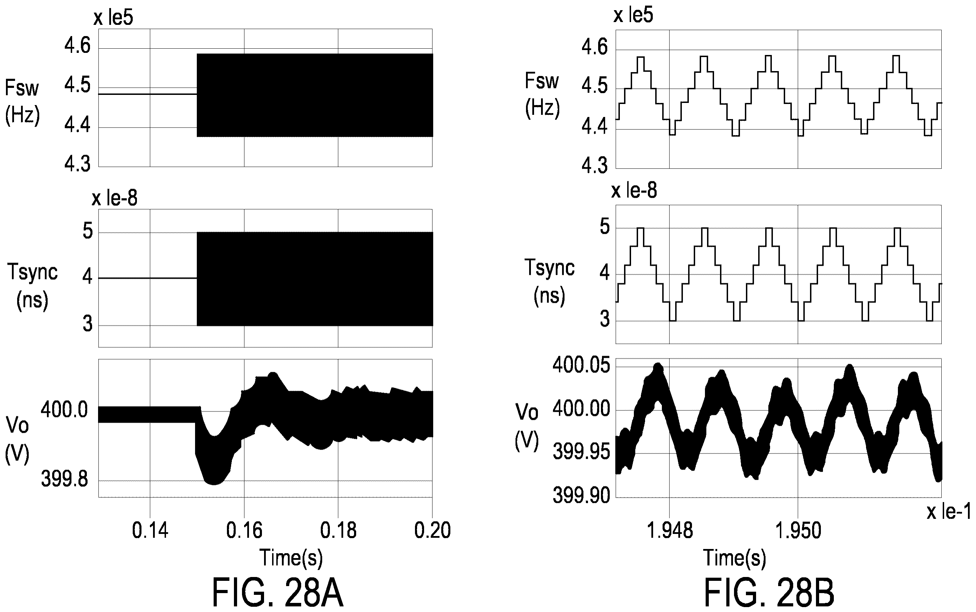

FIG. 28A schematically shows the waveforms of the switching frequency, the synchronization time, and the output voltage of the resonant converter operating in the DCX mode and adopting a closed loop implementation of the spread spectrum scheme. FIG. 28B shows the waveforms of FIG. 28A during a certain period of time. As shown in FIG. 28A and FIG. 28B, at about 150ms, the triangular dither signals are injected as feed-forward terms into the controller. Due to the wide bandwidth, the closed loop control is able to regulate the output voltage with minimal voltage deviation.

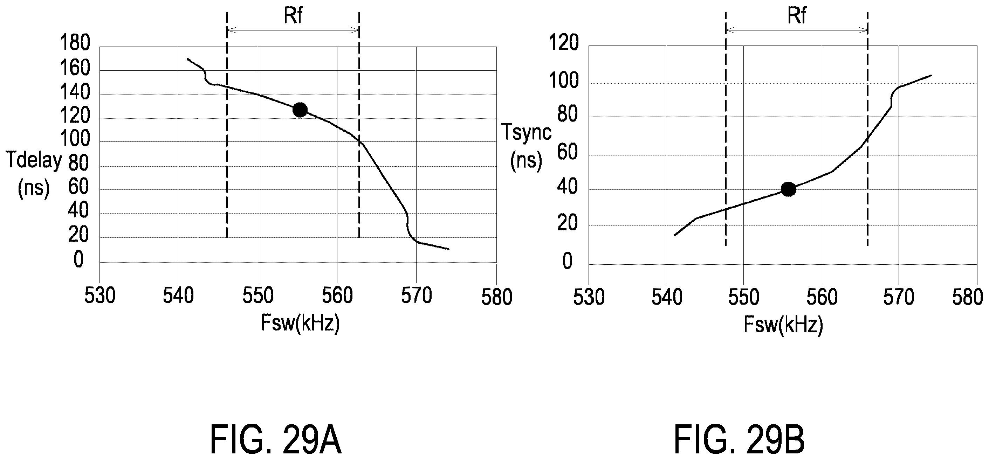

FIG. 29A schematically shows the relation curve of the delay time and the switching frequency of the resonant converter under the boost mode. FIG. 29B schematically shows the relation curve of the synchronization time and the switching frequency of the resonant converter under the boost mode. A look up table for different possible switching frequencies Fsw and delay times Tdelay under the boost mode may be obtained according to the relation curve shown in FIG. 29A, and a look up table for different possible switching frequencies Fsw and synchronization times Tsync under the boost mode may be obtained according to the relation curve shown in FIG. 29B. As shown in FIG. 29A and FIG. 29B, unlike DCX mode, the boost mode requires simultaneous adjustments in the delay time Tdelay and the synchronization time Tsync with varying switching frequency Fsw to maintain stable voltage gain. As the switching frequency Fsw increases, the synchronization time Tsync also increases linearly, while the delay time Tdelay decreases linearly. This leads to the possibility of choosing triangular dither signals for delay time dither signal ΔTdelay and synchronization time dither signal ΔTsync with varying triangular switching frequency Fsw. With respect to the switching frequency Fsw, the synchronization time Tsync would be in phase, and the delay time Tdelay would be out of phase. Additionally, the preferable dithering range Rf of switching frequency Fsw is also shown in the figures, but not limited thereto.

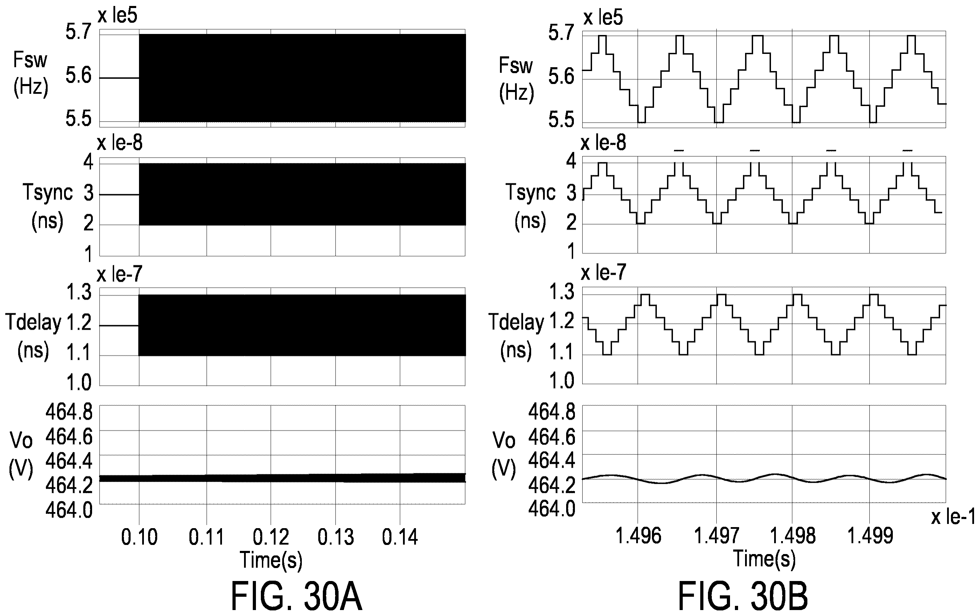

FIG. 30A schematically shows the waveforms of the switching frequency, the synchronization time, the delay time, and the output voltage of the resonant converter operating in the boost mode and adopting an open loop implementation of the spread spectrum scheme. FIG. 30B shows the waveforms of FIG. 30A during a certain period of time. As shown in FIG. 30A and FIG. 30B, with the phase compensation, the voltage gain is maintained. Moreover, in the embodiment, the phase compensation is deemed necessary to maintain ZVS (zero-voltage switching) of the primary and secondary switches in addition to maintaining voltage gain.

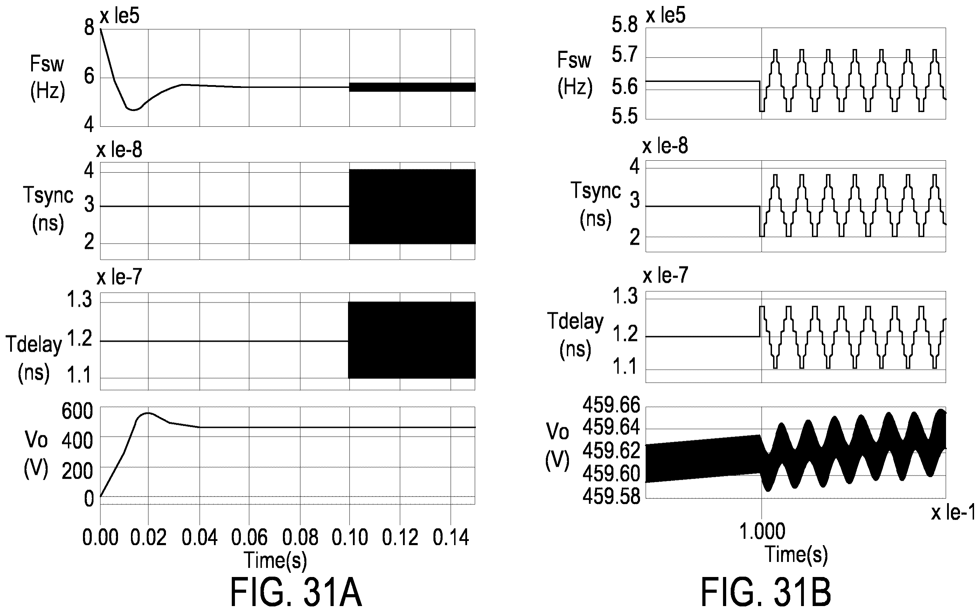

FIG. 31A schematically shows the waveforms of the switching frequency, the synchronization time, the delay time, and the output voltage of the resonant converter operating in the boost mode and adopting a closed loop implementation of the spread spectrum scheme. FIG. 31B shows the waveforms of FIG. 31A during a certain period of time. As shown in FIG. 31A and FIG. 31B, compared with the open loop implementation, the closed loop implementation could even achieve a better voltage regulation capability, namely maintaining the output voltage Vo more stable.

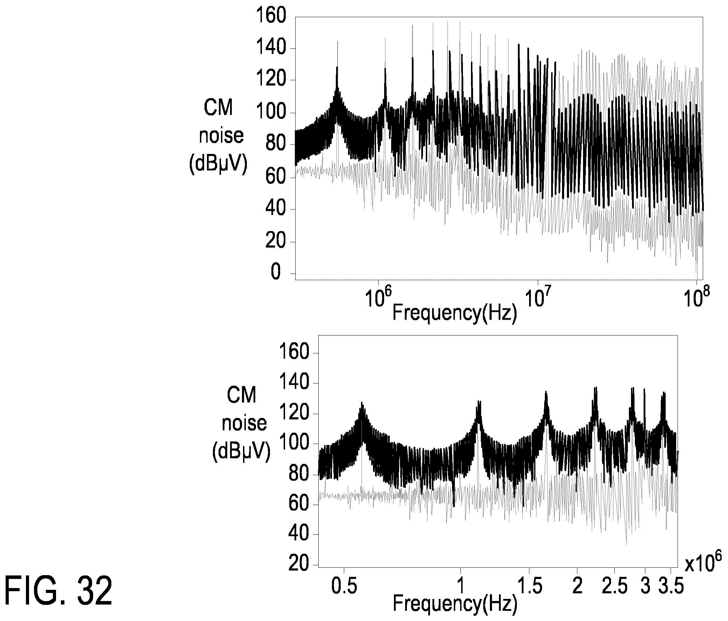

FIG. 32 schematically show the comparison of CM noises with and without applying the spread spectrum scheme under the boost mode. In FIG. 32, the waveforms in the case without applying the spread spectrum scheme are depicted by grayer color, and the waveforms in the case with applying the spread spectrum scheme are depicted by darker color. Further, in FIG. 32, the lower oscillogram shows the waveforms within a certain range of frequency in the upper oscillogram, and the simulation results is obtained through performing direct FFT on the sensing voltages across LISN terminals. As shown in FIG. 32, a 20 dB reduction in peak emissions can be achieved.

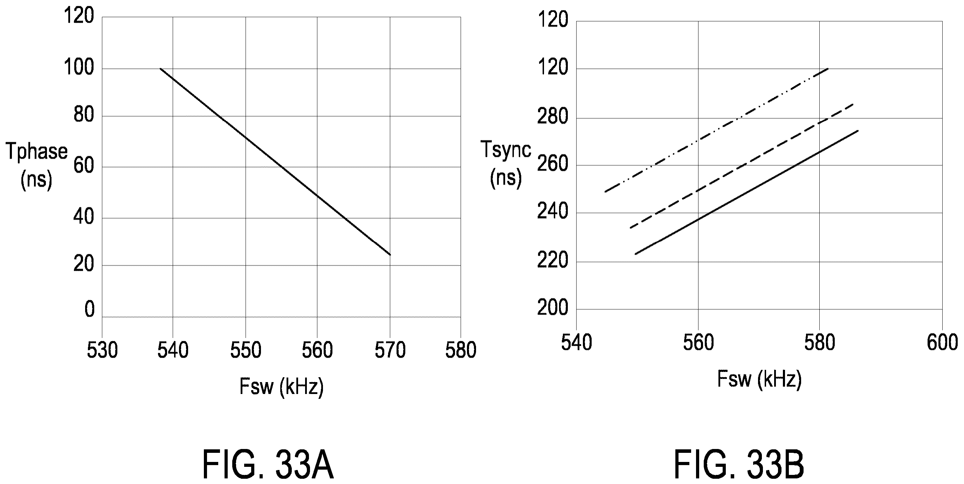

FIG. 33A schematically shows the relation curve of the phase shift time and the switching frequency of the resonant converter under the buck mode. FIG. 33B schematically shows the relation curves of the synchronization time and the switching frequency of the resonant converter under the buck mode with different phase shift time. In FIG. 33B, three relation curves represent three cases of different phase shift time Tdelay. For example, the relation curve depicted by solid line at the bottom represents the case of the phase shift time Tdelay equal to 30 ns, the relation curve depicted by dashed line in the middle represents the case of the phase shift time Tdelay equal to 50 ns, and the relation curve depicted by chain line at the top represents the case of the phase shift time Tdelay equal to 85 ns. A look up table for the phase shift time Tdelay and the synchronization time Tsync with respect to the switching frequency Fsw under the buck mode may be obtained according to the relation curves shown in FIG. 33A and FIG. 33B. As shown in FIG. 33A and FIG. 33B, in the buck mode, if the phase shift time Tphase for primary switches is fixed, the synchronization time Tsync increases linearly with the increase in switching frequency Fsw. While if the synchronization time Tsync is fixed, the phase shift time Tphase decreases linearly. Therefore, there are two possible ways to implement dithering in buck mode, thereby providing additional degree of control and choice. In the following simulation results, the first approach is demonstrated, wherein the phase shift time Tphase is fixed and the synchronization time Tsync varies in a triangular jitter pattern along with the switching frequency Fsw.

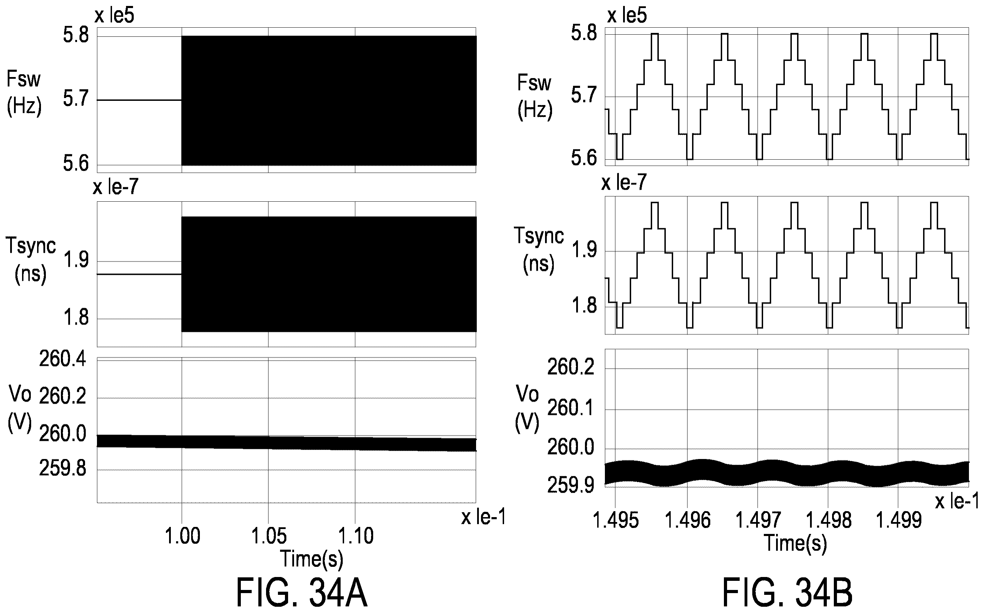

FIG. 34A schematically shows the waveforms of the switching frequency, the synchronization time, and the output voltage of the resonant converter operating in the buck mode and adopting an open loop implementation of the spread spectrum scheme. FIG. 34B shows the waveforms of FIG. 34A during a certain period of time. As shown in FIG. 34A and FIG. 34B, with the phase compensation, the voltage gain is maintained. Moreover, in the embodiment, the phase compensation is deemed necessary to maintain ZVS of the primary and secondary switches in addition to maintaining voltage gain. In this case, the phase shift time Tphase is maintained constant.

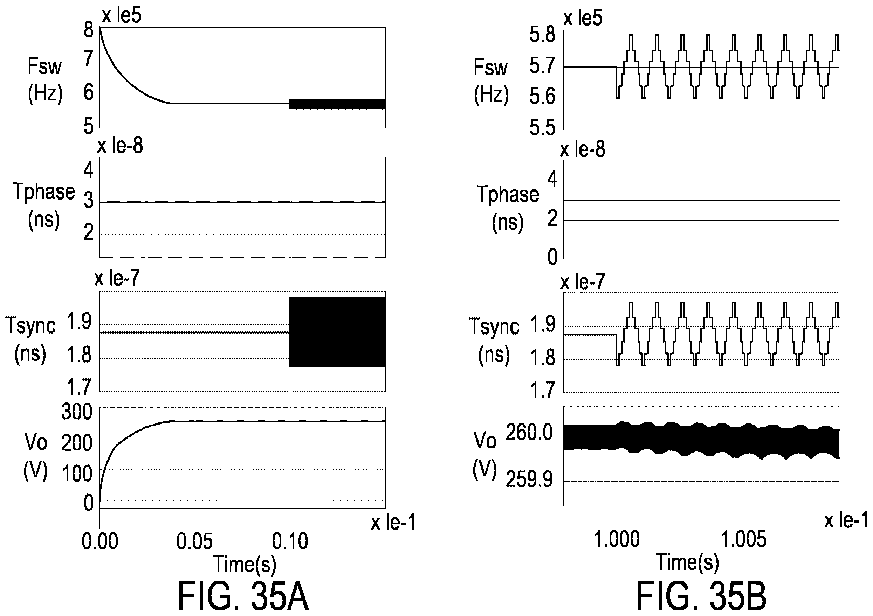

FIG. 35A schematically shows the waveforms of the switching frequency, the phase shift time, the synchronization time, and the output voltage of the resonant converter operating in the buck mode and adopting a closed loop implementation of the spread spectrum scheme. FIG. 35B shows the waveforms of FIG. 35A during a certain period of time. As shown in FIG. 35A and FIG. 35B, the closed loop implementation also have good voltage regulation capability, thereby maintaining the output voltage Vo stable.

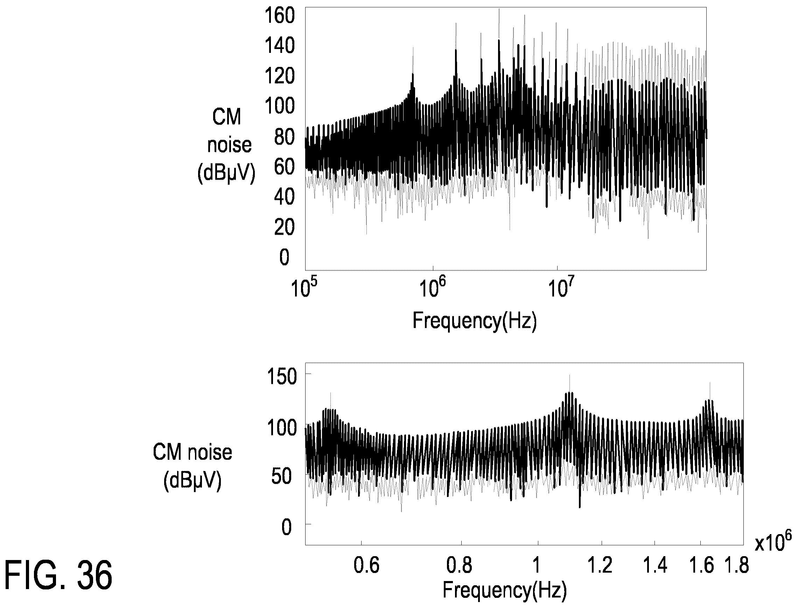

FIG. 36 schematically show the comparison of CM noises with and without applying the spread spectrum scheme under the buck mode. In FIG. 36, the waveforms in the case without applying the spread spectrum scheme are depicted by grayer color, and the waveforms in the case with applying the spread spectrum scheme are depicted by darker color. Further, in FIG. 36, the lower oscillogram shows the waveforms within a certain range of frequency in the upper oscillogram, and the simulation results is obtained through performing direct FFT on the sensing voltages across LISN terminals. As shown in FIG. 36, a 20 dB reduction in peak emissions can be achieved.

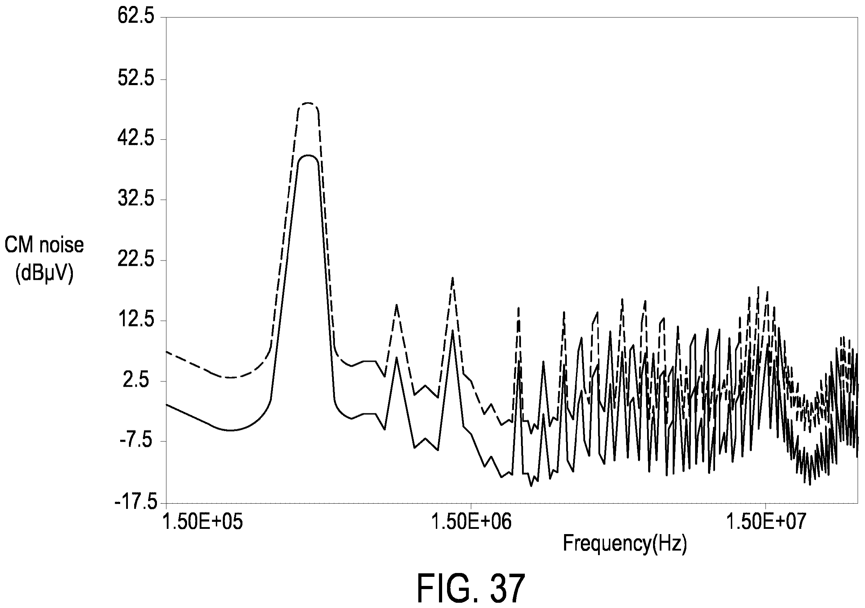

FIG. 37 schematically shows simulation results of CM noises with and without the proposed magnetic integration scheme, local ground scheme, and spread spectrum scheme. In FIG. 37, the simulation result with the proposed magnetic integration scheme, local ground scheme, and spread spectrum scheme is depicted by solid lines, and the simulation result without the proposed magnetic integration scheme, local ground scheme, and spread spectrum scheme is depicted by dashed lines. In the simulation with the proposed magnetic integration scheme, local ground scheme, and spread spectrum scheme, the capacitance of Y capacitor is 80nF, and the resonant converter operates under DCX mode.

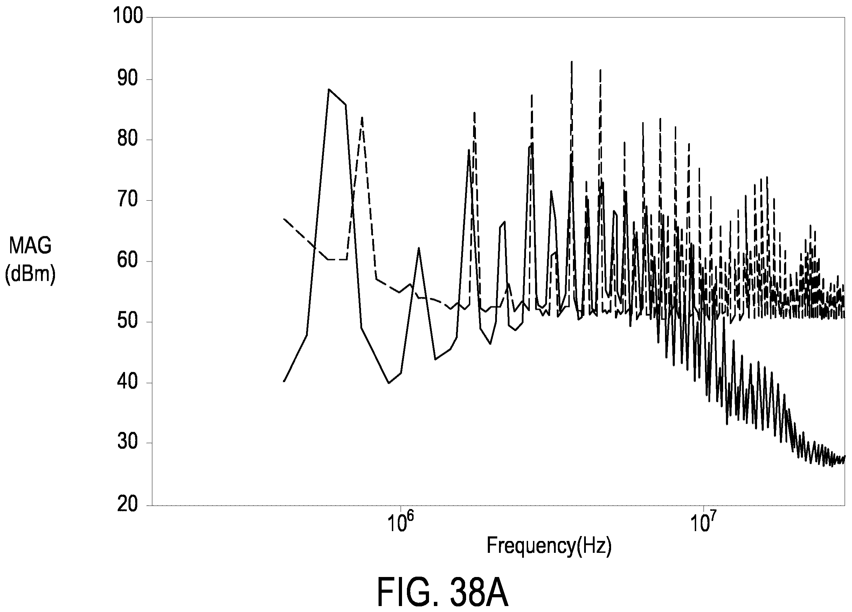

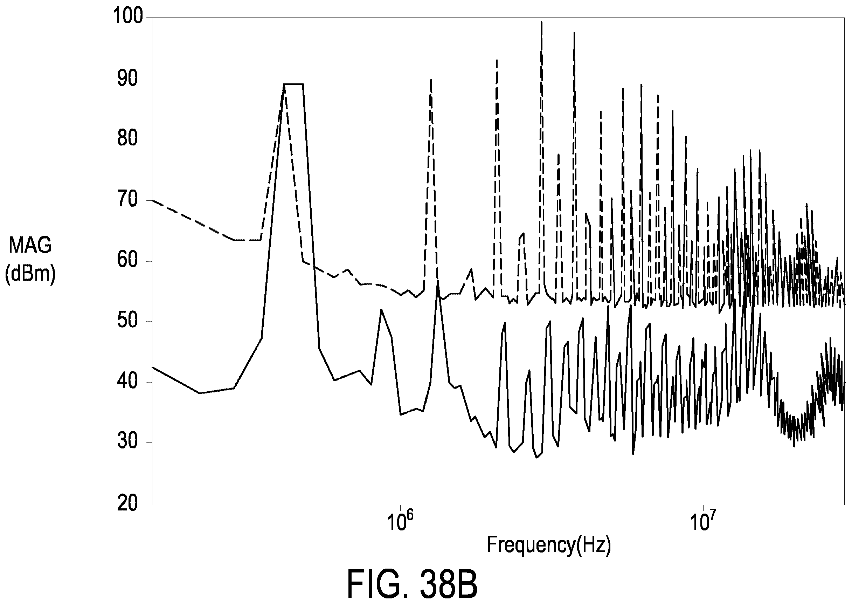

FIG. 38A and FIG. 38B schematically shows conducted emissions test results with and without the proposed magnetic integration scheme, local ground scheme, and spread spectrum scheme. Similarly, in FIG. 38A and FIG. 38B, the test result with the proposed magnetic integration scheme, local ground scheme, and spread spectrum scheme is depicted by solid lines, and the test result without the proposed magnetic integration scheme, local ground scheme, and spread spectrum scheme is depicted by dashed lines. In the local ground scheme adopted in the simulation of FIG. 38A, the capacitance of Y capacitor is 80 nF; while in the local ground scheme adopted in the simulation of FIG. 38B, the capacitance of Y capacitor is 1 nF.

As evident from the spectrum, the three proposed schemes (i.e., the magnetic integration scheme, the local ground scheme, and the spread spectrum scheme) are decoupled, as such their effect is merely an additional attenuation in the spectrum, and they do not compete with each other. Moreover, each scheme can be added during different stages of the design process.

In accordance with an aspect of the present disclosure, a resonant converter is provided as a first embodiment. The resonant converter includes a primary circuit, an integrated transformer, a secondary circuit, a local ground, a first Y capacitor and a second Y capacitor. The primary circuit has a first positive line and a first negative line, and includes primary switches electrically connected between the first positive line and the first negative line of the primary circuit. The integrated transformer is electrically connected to the primary circuit. The secondary circuit is electrically connected to the integrated transformer, has a second positive line and a second negative line, and includes secondary switches electrically connected between the second positive line and the second negative line of the secondary circuit. The first Y capacitor is coupled between the local ground and the first positive line or the first negative line of the primary circuit. The second Y capacitor is coupled between the local ground and the second positive line or the second negative line of the secondary circuit. The first Y capacitor, the second Y capacitor and the local ground are configured to circulate common mode noise currents between the primary circuit and the secondary circuit.

In an embodiment, the first Y capacitor includes at least one of a Y capacitor coupled between the local ground and the first positive line and a Y capacitor coupled between the local ground and the first negative line.

In an embodiment, the second Y capacitor includes at least one of a Y capacitor coupled between the local ground and the second positive line and a Y capacitor coupled between the local ground and the second negative line.

In an embodiment, the resonant converter further includes a heatsink, a chassis ground, primary parasitic capacitances and secondary parasitic capacitances. The primary parasitic capacitances are coupled between the primary circuit and the heatsink, the secondary parasitic capacitances are coupled between the secondary circuit and the heatsink, and the heatsink is connected to the chassis ground.

In an embodiment, the primary parasitic capacitances include a parasitic capacitance coupled between the first negative line and the heatsink.

In an embodiment, the primary switches form a first bridge arm and a second bridge arm electrically connected in parallel, and the primary parasitic capacitances include a first parasitic capacitance coupled between a midpoint of the first bridge arm and the heatsink and a second parasitic capacitance coupled between a midpoint of the second bridge arm and the heatsink.

In an embodiment, the secondary parasitic capacitances include a parasitic capacitance coupled between the second negative line and the heatsink.

In an embodiment, the secondary switches form a first bridge arm and a second bridge arm electrically connected in parallel, and the secondary parasitic capacitances include a first parasitic capacitance coupled between a midpoint of the first bridge arm and the heatsink and a second parasitic capacitance coupled between a midpoint of the second bridge arm and the heatsink.

In an embodiment, the resonant converter further includes a controller electrically connected to the primary circuit and the secondary circuit, the controller is configured to control the primary switches and the secondary switches to operate at a switching frequency dithering with a first variation, and the controller is further configured to control the primary switches and the secondary switches to operate with a phase parameter dithering with a second variation, which is corresponding to the first variation, to make a voltage gain of the resonant converter stable.

In an embodiment, the controller includes:

a frequency control unit, configured to determine a switching frequency parameter according to an output voltage of the secondary circuit and a reference voltage;
a steady state parameter unit, configured to determine a steady-state phase parameter according to an input voltage of the primary circuit and the output voltage and an output current of the secondary circuit;
a dither signal generation unit, configured to generate a first dither signal with the first variation and a second dither signal with the second variation according to the output voltage and the output current;
a first adder, electrically connected to the frequency control unit and the dither signal generation unit, and configured to sum up the switching frequency parameter and the first dither signal to generate the switching frequency;
a second adder, electrically connected to the steady state parameter unit and the dither signal generation unit, and configured to sum up the steady-state phase parameter and the second dither signal to generate the phase parameter; and
a PWM unit, electrically connected to the first adder and the second adder, and configured to generate the control signals for the primary switches and the secondary switches according to the switching frequency and the phase parameter.

In an embodiment, when the resonant converter is configured to operate in a buck mode, the phase parameter includes a time of the primary switches being maintained in an off state and/or a phase difference between control signals of the primary switches and control signals of the secondary switches.

In an embodiment, when the resonant converter is configured to operate in a DCX mode, the phase parameter includes a phase difference between control signals of the primary switches and control signals of the secondary switches.

In an embodiment, when the resonant converter is configured to operate in a boost mode, the phase parameter includes a time of the secondary switches being maintained in an off state and a phase difference between control signals of the primary switches and control signals of the secondary switches.

In an embodiment, the integrated transformer includes:

a magnetic core, including a plate, a first side pillar, a first winding pillar, a middle pillar, a second winding pillar and a second side pillar, wherein the first side pillar, the first winding pillar, the middle pillar, the second winding pillar and the second side pillar are disposed on the plate and are arranged sequentially along a first axis;

a primary winding, wound on the first winding pillar and the second winding pillar, and including primary winding portions coupled sequentially, wherein each odd-numbered primary winding portion of the primary winding portions is wound on the first winding pillar, each even-numbered primary winding portion of the primary winding portions is wound on the second winding pillar, and the primary winding has a different number of turns on the first winding pillar and the second winding pillar; and

a secondary winding, wound on the first winding pillar and the second winding pillar, and including secondary winding portions coupled sequentially and interleaved with the primary winding portions, wherein each even-numbered secondary winding portion of the secondary winding portions is wound on the first winding pillar, each odd-numbered secondary winding portion of the secondary winding portions is wound on the second winding pillar, and the secondary winding has a different number of turns on the first winding pillar and the second winding pillar.

In an embodiment, the magnetic core further includes a third winding pillar and a fourth winding pillar disposed on the plate, the third winding pillar and the first winding pillar are arranged along a second axis perpendicular to the first axis, and the fourth winding pillar and the second winding pillar are arranged along the second axis.

In an embodiment, the primary winding is further wound on the third winding pillar and the fourth winding pillar to form integrated DM (differential mode) inductors and integrated CM (common mode) inductors, each odd-numbered primary winding portion of the primary winding portions is wound on the first winding pillar and the third winding pillar, and each even-numbered primary winding portion of the primary winding portions is wound on the second winding pillar and the fourth winding pillar.

In an embodiment, the secondary winding is further wound on the third winding pillar and the fourth winding pillar to form integrated DM inductors and integrated CM inductors, each even-numbered secondary winding portion of the secondary winding portions is wound on the first winding pillar and the third winding pillar, and each odd-numbered secondary winding portion of the secondary winding portions is wound on the second winding pillar and the fourth winding pillar.

In an embodiment, the resonant converter further includes a shielding winding wound on the magnetic core, the shielding winding including shielding winding portions, and each of the shielding winding portions is disposed between a corresponding one of the primary winding portions and a corresponding one of the secondary winding portions adjacent to each other.

In an embodiment, two of the shielding winding portions at two sides of each of the secondary winding portions are electrically connected in parallel to form a branch, and a first one of the shielding winding portions, all said branches, and a last one of the shielding winding portions are electrically connected in series.

In an embodiment, the shielding winding portions of the shielding winding are electrically connected in parallel.

In accordance with another aspect of the present disclosure, an integrated transformer of a resonant converter is provided as a second embodiment. The integrated transformer is configured to be electrically connected between a primary circuit and a secondary circuit of the resonant converter. The integrated transformer includes a magnetic core, a primary winding and a secondary winding. The magnetic core includes a plate, a first side pillar, a first winding pillar, a middle pillar, a second winding pillar and a second side pillar. The first side pillar, the first winding pillar, the middle pillar, the second winding pillar and the second side pillar are disposed on the plate and are arranged sequentially along a first axis. The primary winding is wound on the first winding pillar and the second winding pillar, and includes primary winding portions coupled sequentially. Each odd-numbered primary winding portion of the primary winding portions is wound on the first winding pillar, and each even-numbered primary winding portion of the primary winding portions is wound on the second winding pillar. The primary winding has a different number of turns on the first winding pillar and the second winding pillar. The secondary winding is wound on the first winding pillar and the second winding pillar, and includes secondary winding portions coupled sequentially and interleaved with the primary winding portions. Each even-numbered secondary winding portion of the secondary winding portions is wound on the first winding pillar, and each odd-numbered secondary winding portion of the secondary winding portions is wound on the second winding pillar. The secondary winding has a different number of turns on the first winding pillar and the second winding pillar.

In an embodiment, the magnetic core further includes a third winding pillar and a fourth winding pillar disposed on the plate, the third winding pillar and the first winding pillar are arranged along a second axis perpendicular to the first axis, and the fourth winding pillar and the second winding pillar are arranged along the second axis.

In an embodiment, the primary winding is further wound on the third winding pillar and the fourth winding pillar to form integrated DM (differential mode) inductors and integrated CM (common mode) inductors, each odd-numbered primary winding portion of the primary winding portions is wound on the first winding pillar and the third winding pillar, and each even-numbered primary winding portion of the primary winding portions is wound on the second winding pillar and the fourth winding pillar.

In an embodiment, the secondary winding is further wound on the third winding pillar and the fourth winding pillar to form integrated DM inductors and integrated CM inductors, each even-numbered secondary winding portion of the secondary winding portions is wound on the first winding pillar and the third winding pillar, and each odd-numbered secondary winding portion of the secondary winding portions is wound on the second winding pillar and the fourth winding pillar.

In an embodiment, the middle pillar is extended toward the second axis, and at least a part of the middle pillar is located between the third winding pillar and the fourth winding pillar.

In an embodiment, the integrated transformer further includes a shielding winding wound on the magnetic core, the shielding winding including shielding winding portions, and each of the shielding winding portions is disposed between a corresponding one of the primary winding portions and a corresponding one of the secondary winding portions adjacent to each other.

In an embodiment, two of the shielding winding portions at two sides of each of the secondary winding portions are electrically connected in parallel to form a branch, and a first one of the shielding winding portions, all said branches, and a last one of the shielding winding portions are electrically connected in series.

In an embodiment, in the branch formed by two of the shielding winding portions at two sides of a middle one of the secondary winding portions, a midpoint of each of the two of the shielding winding portions is electrically connected to a DC midpoint.

In an embodiment, the shielding winding portions of the shielding winding are electrically connected in parallel.

In an embodiment, the shielding winding includes a planar PCB-based winding.

In an embodiment, the primary winding and the secondary winding include planar PCB-based windings.

In an embodiment, the integrated transformer further includes another magnetic core assembled to the magnetic core and having a planar shape or a structure symmetrical with the magnetic core.

In accordance with another aspect of the present disclosure, a resonant converter is provided as a third embodiment. The resonant converter includes a primary circuit, an integrated transformer, a secondary circuit and a controller. The primary circuit is configured to receive an input voltage, and includes primary switches. The integrated transformer is electrically connected to the primary circuit. The secondary circuit is electrically connected to the integrated transformer and is configured to provide an output voltage, and the secondary circuit includes secondary switches. The controller is electrically connected to the primary circuit and the secondary circuit, and is configured to provide control signals for the primary switches and the secondary switches. The controller is configured to control the primary switches and the secondary switches to operate at a switching frequency dithering with a first variation, and the controller is further configured to control the primary switches and the secondary switches to operate with a phase parameter dithering with a second variation, which is corresponding to the first variation, to make a voltage gain of the resonant converter stable.

In an embodiment, the controller includes:

a frequency control unit, configured to determine a switching frequency parameter according to the output voltage and a reference voltage;

a steady state parameter unit, configured to determine a steady-state phase parameter according to the input voltage, the output voltage and an output current of the secondary circuit;

a dither signal generation unit, configured to generate a first dither signal with the first variation and a second dither signal with the second variation according to the output voltage and the output current;

a first adder, electrically connected to the frequency control unit and the dither signal generation unit, and configured to sum up the switching frequency parameter and the first dither signal to generate the switching frequency;

a second adder, electrically connected to the steady state parameter unit and the dither signal generation unit, and configured to sum up the steady-state phase parameter and the second dither signal to generate the phase parameter; and

a PWM unit, electrically connected to the first adder and the second adder, and configured to generate the control signals for the primary switches and the secondary switches according to the switching frequency and the phase parameter.

In an embodiment, when the resonant converter is configured to operate in a buck mode, the phase parameter includes a time of the primary switches being maintained in an off state and/or a phase difference between control signals of the primary switches and control signals of the secondary switches.

In an embodiment, when the resonant converter is configured to operate in a DCX mode, the phase parameter includes a phase difference between control signals of the primary switches and control signals of the secondary switches.

In an embodiment, when the resonant converter is configured to operate in a boost mode, the phase parameter includes a time of the secondary switches being maintained in an off state and a phase difference between control signals of the primary switches and control signals of the secondary switches.

In an embodiment, at least one of the switching frequency and the phase parameter includes triangular dither signals.

In an embodiment, the first variation may be about 10 kHz.

In some embodiments, the first variation may be in a range of approximately 5 kHz to 20 kHz, 8 kHz to 12 kHz, or 9 kHz to 11 kHz according to different kinds of needs.

In an embodiment, the primary switches form a full-bridge configuration.

In an embodiment, the secondary switches form a full-bridge configuration.

In accordance with another aspect of the present disclosure, a control method of a resonant converter is provided as a fourth embodiment. The resonant converter includes a primary circuit, an integrated transformer, a secondary circuit and a controller. The integrated transformer is electrically connected between the primary circuit and the secondary circuit. The control method includes steps of: receiving an input voltage by the primary circuit, providing an output voltage by the secondary circuit, and providing control signals for primary switches of the primary circuit and secondary switches of the secondary circuit by the controller; controlling the primary switches and the secondary switches to operate at a switching frequency dithering with a first variation by the controller; and controlling the primary switches and the secondary switches to operate with a phase parameter dithering with a second variation, which is corresponding to the first variation, by the controller to make a voltage gain of the resonant converter stable.

In an embodiment, the control method further includes steps of:

determining a switching frequency parameter according to the output voltage and a reference voltage by a frequency control unit of the controller;

determining a steady-state phase parameter according to the input voltage, the output voltage and an output current of the secondary circuit by a steady state parameter unit of the controller;

generating a first dither signal with the first variation and a second dither signal with the second variation according to the output voltage and the output current by a dither signal generation unit of the controller;

summing up the switching frequency parameter and the first dither signal to generate the switching frequency by a first adder of the controller;

summing up the steady-state phase parameter and the second dither signal to generate the phase parameter by a second adder of the controller; and

generating the control signals for the primary switches and the secondary switches according to the switching frequency and the phase parameter by a PWM unit of the controller.

In an embodiment, when the resonant converter operates in a buck mode, the phase parameter includes a time of the primary switches being maintained in an off state and/or a phase difference between control signals of the primary switches and control signals of the secondary switches.

In an embodiment, when the resonant converter operates in a DCX mode, the phase parameter includes a phase difference between control signals of the primary switches and control signals of the secondary switches.

In an embodiment, when the resonant converter operates in a boost mode, the phase parameter includes a time of the secondary switches being maintained in an off state and a phase difference between control signals of the primary switches and control signals of the secondary switches.

In an embodiment, at least one of the switching frequency and the phase parameter includes triangular dither signals.

In an embodiment, the first variation may be about 10 kHz.

In some embodiments, the first variation may be in a range of approximately 5 kHz to 20 kHz, 8 kHz to 12 kHz, or 9 kHz to 11 kHz according to different kinds of needs.

**Claims**

1. A resonant converter (100), **characterized by** comprising:

a primary circuit (2), having a first positive line and a first negative line, and comprising primary switches (Q1, Q2, Q3, Q4) electrically connected between the first positive line and the first negative line of the primary circuit (2);
an integrated transformer (1), electrically connected to the primary circuit (2);
a secondary circuit (3), electrically connected to the integrated transformer (1), having a second positive line and a second negative line, and comprising secondary switches (Q5, Q6, Q7, Q8) electrically connected between the second positive line and the second negative line of the secondary circuit (3); and
a local ground (102), a first Y capacitor (CY1, CY2), and a second Y capacitor (CY3, CY4), wherein the first Y capacitor (CY1, CY2) is coupled between the local ground (102) and the first positive line or the first negative line of the primary circuit (2), the second Y capacitor (CY3, CY4) is coupled between the local ground (102) and the second positive line or the second negative line of the secondary circuit (3), and the first Y capacitor (CY1, CY2), the second Y capacitor (CY3, CY4), and the local ground (102) are configured to circulate common mode noise currents between the primary circuit (2) and the secondary circuit (3).

2. The resonant converter (100) according to claim 1, wherein the first Y capacitor comprises at least one of a Y capacitor (CY1) coupled between the local ground (102) and the first positive line and a Y capacitor (CY2) coupled between the local ground (102) and the first negative line;
wherein the second Y capacitor comprises at least one of a Y capacitor (CY3) coupled between the local ground (102) and the second positive line and a Y capacitor (CY4) coupled between the local ground (102) and the second negative line.

3. The resonant converter (100) according to claim 1 or 2, further comprising a heatsink (101), a chassis ground (103), primary parasitic capacitances (CP1, CP2, CP3) and secondary parasitic capacitances (CP4, CP5, CP6), wherein the primary parasitic capacitances (CP1, CP2, CP3) are coupled between the primary circuit (2) and the heatsink (101), the secondary parasitic capacitances (CP4, CP5, CP6) are coupled between the secondary circuit (3) and the heatsink (101), and the heatsink (101) is connected to the chassis ground (103).

4. The resonant converter (100) according to claim 3, wherein the primary switches (Q1, Q2, Q3, Q4) form a first bridge arm and a second bridge arm electrically connected in parallel, and the primary parasitic capacitances comprise a first parasitic capacitance (CP1) coupled between a midpoint of the first bridge arm and the heatsink (101) and a second parasitic capacitance (CP2) coupled between a midpoint of the second bridge arm and the heatsink (101);
wherein the primary parasitic capacitances further comprise a parasitic capacitance (CP3) coupled between the first negative line and the heatsink.

5. The resonant converter (100) according to claim 3 or 4, wherein the secondary switches (Q5, Q6, Q7, Q8) form a first bridge arm and a second bridge arm electrically connected in parallel, and the secondary parasitic capacitances comprise a first parasitic capacitance (CP4) coupled between a midpoint of the first bridge arm and the heatsink (101) and a second parasitic capacitance (CP5) coupled between a midpoint of the second bridge arm and the heatsink (101);
wherein the secondary parasitic capacitances further comprise a parasitic capacitance (CP6) coupled between the second negative line and the heatsink (101).

6. The resonant converter (100) according to any of the preceding claims, further comprising a controller (5) electrically connected to the primary circuit (2) and the secondary circuit (3), wherein the controller (5) is configured to control the primary switches (Q1, Q2, Q3, Q4) and the secondary switches (Q5, Q6, Q7, Q8) to operate at a switching frequency (Fsw) dithering with a first variation, and the controller (5) is further configured to control the primary switches (Q1, Q2, Q3, Q4) and the secondary switches (Q5, Q6, Q7, Q8) to operate with a phase parameter (Tphase, Tsync, Tdelay) dithering with a second variation, which is corresponding to the first variation, to make a voltage gain of the resonant converter (100) stable.

7. The resonant converter (100) according to claim 6, wherein the controller (5) comprises:

a frequency control unit (51), configured to determine a switching frequency parameter (Psw) according to an output voltage (Vo) of the secondary circuit (3) and a reference voltage (Vref);
a steady state parameter unit (52), configured to determine a steady-state phase parameter (Pphase, Psync, Pdelay) according to an input voltage (Vin) of the primary circuit (2) and the output voltage (Vo) and an output current (Io) of the secondary circuit (3);
a dither signal generation unit (53), configured to generate a first dither signal ($\Delta$Fsw) with the first variation and a second dither signal ($\Delta$Tphase, $\Delta$Tsync, $\Delta$Tdelay) with the second variation according to the output voltage (Vo) and the output current (Io);

a first adder (57), electrically connected to the frequency control unit (51) and the dither signal generation unit (53), and configured to sum up the switching frequency parameter (Psw) and the first dither signal (ΔFsw) to generate the switching frequency (Fsw);

a second adder (54, 55, 56), electrically connected to the steady state parameter unit (52) and the dither signal generation unit (53), and configured to sum up the steady-state phase parameter (Pphase, Psync, Pdelay) and the second dither signal (ΔTphase, ΔTsync, ΔTdelay) to generate the phase parameter (Tphase, Tsync, Tdelay); and

a PWM unit (58), electrically connected to the first adder (57) and the second adder (54, 55, 56), and configured to generate the control signals for the primary switches (Q1, Q2, Q3, Q4) and the secondary switches (Q5, Q6, Q7, Q8) according to the switching frequency (Fsw) and the phase parameter (Tphase, Tsync, Tdelay).

8. The resonant converter (100) according to claim 6 or 7, wherein when the resonant converter (100) is configured to operate in a buck mode, the phase parameter comprises a time (Tphase) of the primary switches (Q1, Q2, Q3, Q4) being maintained in an off state and/or a phase difference (Tsync) between control signals of the primary switches (Q1, Q2, Q3, Q4) and control signals of the secondary switches (Q5, Q6, Q7, Q8);

wherein when the resonant converter (100) is configured to operate in a DCX mode, the phase parameter comprises the phase difference (Tsync) between the control signals of the primary switches (Q1, Q2, Q3, Q4) and the control signals of the secondary switches (Q5, Q6, Q7, Q8);

wherein when the resonant converter (100) is configured to operate in a boost mode, the phase parameter comprises a time (Tdelay) of the secondary switches (Q5, Q6, Q7, Q8) being maintained in the off state and the phase difference (Tsync) between the control signals of the primary switches (Q1, Q2, Q3, Q4) and the control signals of the secondary switches (Q5, Q6, Q7, Q8).

9. The resonant converter (100) according to any of the preceding claims, wherein the integrated transformer (1) comprises:

a magnetic core (10), comprising a plate (11), a first side pillar (12), a first winding pillar (13), a middle pillar (14), a second winding pillar (15) and a second side pillar (16), wherein the first side pillar (12), the first winding pillar (13), the middle pillar (14), the second winding pillar (15) and the second side pillar (16) are disposed on the plate (11) and are arranged sequentially along a first axis (Y);

a primary winding (Wp), wound on the first winding pillar (13) and the second winding pillar (15), and comprising primary winding portions (P1, P2, P3, P4, P5) coupled sequentially, wherein each odd-numbered primary winding portion (P1, P3, P5) of the primary winding portions is wound on the first winding pillar (13), each even-numbered primary winding portion (P2, P4) of the primary winding portions is wound on the second winding pillar (15), and the primary winding (Wp) has a different number of turns on the first winding pillar (13) and the second winding pillar (15); and

a secondary winding (Ws), wound on the first winding pillar (13) and the second winding pillar (15), and comprising secondary winding portions (S1, S2, S3, S4, S5) coupled sequentially and interleaved with the primary winding portions (P1, P2, P3, P4, P5), wherein each even-numbered secondary winding portion (S2, S4) of the secondary winding portions is wound on the first winding pillar (13), each odd-numbered secondary winding portion (S1, S3, S5) of the secondary winding portions is wound on the second winding pillar (15), and the secondary winding (Ws) has a different number of turns on the first winding pillar (13) and the second winding pillar (15).

10. The resonant converter (100) according to claim 9, wherein the magnetic core (10) further comprises a third winding pillar (17) and a fourth winding pillar (18) disposed on the plate (11), the third winding pillar (17) and the first winding pillar (13) are arranged along a second axis (X) perpendicular to the first axis (Y), and the fourth winding pillar (18) and the second winding pillar (15) are arranged along the second axis (X).

11. The resonant converter (100) according to claim 10, wherein the primary winding (Wp) is further wound on the third winding pillar (17) and the fourth winding pillar (18) to form integrated DM (differential mode) inductors (Ldm2, Ldm2) and integrated CM (common mode) inductors (Lcm1, Lcm2), each odd-numbered primary winding portion (P1, P3, P5) of the primary winding portions is wound on the first winding pillar (13) and the third winding pillar (17), and each even-numbered primary winding portion (P2, P4) of the primary winding portions is wound on the second winding pillar (15) and the fourth winding pillar (18).

12. The resonant converter (100) according to claim 10 or 11, wherein the secondary winding (Ws) is further wound on the third winding pillar (17) and the fourth winding pillar (18) to form integrated DM inductors (Ldm3, Ldm4) and integrated CM inductors (Lcm3, Lcm4), each even-numbered secondary winding portion (S2, S4) of the secondary winding portions is wound on the first winding pillar (13) and the third winding pillar (17), and each odd-numbered secondary winding portion (P1, P3, P5) of the secondary winding portions is wound on the second winding pillar (15) and the fourth winding pillar (18).

13. The resonant converter (100) according to any of claims 9 to 12, further comprising a shielding winding (Wh) wound on the magnetic core (10), wherein the shielding winding (Wh) comprises shielding winding portions (H1-H8), and each of the shielding winding portions (H1) is disposed between a corresponding one of the primary winding portions (P1) and a corresponding one of the secondary winding portions (S2) adjacent to each other.

14. The resonant converter (100) according to claim 13, wherein two of the shielding winding portions (H1, H2) at two sides of each of the secondary winding portions (S2) are electrically connected in parallel to form a branch, and a first one of the shielding winding portions (H8), all said branches, and a last one of the shielding winding portions (H5) are electrically connected in series.

15. The resonant converter (100) according to claim 13, wherein the shielding winding portions (H1-H8) of the shielding winding (Wh) are electrically connected in parallel.

FIG. 1

EP 4 718 700 A1

**FIG. 2**

EP 4 718 700 A1

FIG. 3A

FIG. 3B

EP 4 718 700 A1

FIG. 3C

FIG. 4A

FIG. 4B

FIG. 5A

FIG. 5B

EP 4 718 700 A1

FIG. 6A

FIG. 6B

P5                                    S5

A5 B5

H4                                    H5

S4                                    P4

A4 B4

H3                                    H6

P3                                    S3

A3 B3

H2                                    H7

S2                                    P2

A2 B2

H1                                    H8

P1                                    S1

A1 B1

L

# FIG. 7

FIG. 8A

FIG. 8B

FIG. 9A

EP 4 718 700 A1

**FIG. 9B**

FIG. 10A

FIG. 10B

FIG. 11A

EP 4 718 700 A1

EP 4 718 700 A1

FIG. 11B

EP 4 718 700 A1

**FIG. 11C**

FIG. 12A

EP 4 718 700 A1

FIG. 12B

EP 4 718 700 A1

FIG. 13A

FIG. 13B

FIG. 14A

EP 4 718 700 A1

FIG. 14B

FIG. 15

EP 4 718 700 A1

FIG. 16A

FIG. 16B

FIG. 16C

FIG. 17

FIG. 18

EP 4 718 700 A1

FIG. 19

FIG. 20

EP 4 718 700 A1

EP 4 718 700 A1

5

Q1 Q2 Q3 Q4 Q5 Q6 Q7 Q8

PWM unit — 58

Tphase | Tsync | Tdelay | Fsw

52

Vin →
Vo → | steady state parameter unit | Pphase → 54 ++
Io → | Psync → 55 ++
Pdelay → 56 ++

51

57 ++ | Psw ← frequency control unit ← Vo
← Vref

ΔTphase | ΔTsync | ΔTdelay | ΔFsw

dither signal generation unit — 53

Vo    Io

FIG. 21

FIG. 22A

FIG. 22B

FIG. 22C

FIG. 23A

EP 4 718 700 A1

FIG. 23B

FIG. 23C

EP 4 718 700 A1

FIG. 24

FIG. 25

FIG. 26

FIG. 27A

FIG. 27B

FIG. 27C

FIG. 28A

FIG. 28B

EP 4 718 700 A1

FIG. 29A

FIG. 29B

EP 4 718 700 A1

FIG. 30A

FIG. 30B

FIG. 31B

FIG. 31A

FIG. 32

FIG. 33B

FIG. 33A

FIG. 34A

FIG. 34B

EP 4 718 700 A1

FIG. 35A

FIG. 35B

FIG. 36

FIG. 37

FIG. 38A

FIG. 38B

EP 4 718 700 A1

**EUROPEAN SEARCH REPORT**

Application Number

EP 25 20 4928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 439 134 A (COUTANT LAMBDA LTD [GB]) 19 December 2007 (2007-12-19) | 1 | INV.<br>H02M3/00 |
| Y | * paragraphs [0015], [0045]; figure 2 * | 2-15 | H02M3/335<br>H02M1/12 |
| X | YAN YU ET AL: "Building Common-Mode Analytical Model for Dual Active Bridge Incorporating With Different Modulation Strategies", IEEE TRANSACTIONS ON POWER ELECTRONICS, INSTITUTE OF ELECTRICAL AND ELECTRONICS ENGINEERS, USA, vol. 36, no. 11, 6 April 2021 (2021-04-06) , pages 12608-12619, XP011869797, ISSN: 0885-8993, DOI: 10.1109/TPEL.2021.3071440 [retrieved on 2021-07-26] | 1 | H02M1/44<br>H02M1/00<br>H01F27/38<br>H04B1/69 |
| Y | * abstract; figure 7 * | 2-5 | |
| X | ORVAI ROBERT ET AL: "Cause of the Common-Mode Noise Suppression Effect of Y-Capacitor in Isolated DC/DC Converters", 2024 INTERNATIONAL SYMPOSIUM ON ELECTROMAGNETIC COMPATIBILITY - EMC EUROPE, IEEE, 2 September 2024 (2024-09-02), pages 495-499, XP034735746, DOI: 10.1109/EMCEUROPE59828.2024.10722606 [retrieved on 2024-10-25] | 1 | |
| Y | * abstract; figure 1 * | 2-5 | |
| | -/-- | | |

**TECHNICAL FIELDS SEARCHED (IPC)**

H02M
H01F
H04B

The present search report has been drawn up for all claims

| Place of search | Date of completion of the search | Examiner |
|---|---|---|
| The Hague | 12 February 2026 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 20 4928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DWIZA BELLAMKONDA ET AL: "Analysis of Common-Mode Noise and Mixed-Mode Differential-Mode Noise in Dual Active Bridge Converter", IEEE JOURNAL OF EMERGING AND SELECTED TOPICS IN POWER ELECTRONICS, IEEE, PISCATAWAY, NJ, USA, vol. 11, no. 1, 23 August 2022 (2022-08-23), pages 657-666, XP011933540, ISSN: 2168-6777, DOI: 10.1109/JESTPE.2022.3201327 [retrieved on 2022-08-24] | 1 | |
| Y | * abstract; figure 1 * | 2-5 | |
| | ----- | | |
| X | MAJID PAHLEVANINEZHAD ET AL: "An integrated EMI suppression Y-caps applicable to high frequency planar transformers in high power DC-DC converters used for electric vehicle", IECON 2012 - 38TH ANNUAL CONFERENCE ON IEEE INDUSTRIAL ELECTRONICS SOCIETY, IEEE, 25 October 2012 (2012-10-25), pages 4246-4251, XP032281524, DOI: 10.1109/IECON.2012.6389207 ISBN: 978-1-4673-2419-9 | 1 | TECHNICAL FIELDS SEARCHED (IPC) |
| Y | * abstract; figure 5 * | 2-5 | |
| | ----- | | |
| Y | US 2008/297275 A1 (HOLLENBECK ROBERT KEITH [US] ET AL) 4 December 2008 (2008-12-04) * paragraph [0011]; figure 1 * | 2-5 | |
| | ----- | | |
| Y | US 10 826 403 B1 (RAMADASS YOGESH KUMAR [US] ET AL) 3 November 2020 (2020-11-03) * column 4, lines 3-23; figure 2 * | 2-5 | |
| | ----- | | |
| | -/-- | | |

The present search report has been drawn up for all claims

| Place of search | Date of completion of the search | Examiner |
|---|---|---|
| The Hague | 12 February 2026 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

**Application Number**

EP 25 20 4928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 178 099 B1 (SCHUTTEN MICHAEL JOSEPH [US] ET AL) 23 January 2001 (2001-01-23) * column 5, lines 51-62; figures 1,9 * | 6-8 | |
| Y | KR 101 911 642 B1 (ULSAN NAT INST SCIENCE & TECH UNIST [KR]) 24 October 2018 (2018-10-24) * paragraph [0051]; figure 7 * | 6-8 | |
| Y | CN 115 458 277 A (DELTA ELECTRONIC ENTERPRISE MAN SHANGHAI CO LTD) 9 December 2022 (2022-12-09) * figures 6-8 * | 9-12 | |
| Y | US 2023/361687 A1 (NJIENDE HUGUES [DE]) 9 November 2023 (2023-11-09) * paragraph [0177]; figures 13-16 * | 9-12 | |
| Y | WO 2014/061113 A1 (HITACHI LTD [JP]) 24 April 2014 (2014-04-24) * figures 7,12 * | 9-12 | |
| Y | US 2005/151614 A1 (DADAFSHAR MAJID [US]) 14 July 2005 (2005-07-14) * claim 11; figure 2a * | 9-12 | **TECHNICAL FIELDS SEARCHED (IPC)** |
| Y | CN 115 312 303 A (DELTA OPTOELECTRONICS INC) 8 November 2022 (2022-11-08) * figures 7,12 * | 9-12 | |
| Y | US 2017/250025 A1 (WEI YUNFENG [CN] ET AL) 31 August 2017 (2017-08-31) * figures 16-18 * | 9-12 | |
| Y | US 2022/320998 A1 (JITARU IONEL [US] ET AL) 6 October 2022 (2022-10-06) * paragraph [0112]; figures 6A,6B * | 13-15 | |

The present search report has been drawn up for all claims

| Place of search | Date of completion of the search | Examiner |
|---|---|---|
| The Hague | 12 February 2026 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 4928

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| GB 2439134 | A | 19-12-2007 | NONE | | |
| US 2008297275 | A1 | 04-12-2008 | NONE | | |
| US 10826403 | B1 | 03-11-2020 | CN | 114375538 A | 19-04-2022 |
| | | | EP | 4029136 A1 | 20-07-2022 |
| | | | JP | 7625587 B2 | 03-02-2025 |
| | | | JP | 2022549587 A | 28-11-2022 |
| | | | US | 10826403 B1 | 03-11-2020 |
| | | | WO | 2021050630 A1 | 18-03-2021 |
| US 6178099 | B1 | 23-01-2001 | NONE | | |
| KR 101911642 | B1 | 24-10-2018 | NONE | | |
| CN 115458277 | A | 09-12-2022 | CN | 115458277 A | 09-12-2022 |
| | | | US | 2022392696 A1 | 08-12-2022 |
| US 2023361687 | A1 | 09-11-2023 | CN | 117013828 A | 07-11-2023 |
| | | | EP | 4273896 A1 | 08-11-2023 |
| | | | EP | 4625448 A2 | 01-10-2025 |
| | | | US | 2023361687 A1 | 09-11-2023 |
| WO 2014061113 | A1 | 24-04-2014 | JP | 5945002 B2 | 05-07-2016 |
| | | | JP | WO2014061113 A1 | 05-09-2016 |
| | | | WO | 2014061113 A1 | 24-04-2014 |
| US 2005151614 | A1 | 14-07-2005 | CN | 1697099 A | 16-11-2005 |
| | | | TW | I275109 B | 01-03-2007 |
| | | | US | 2005151614 A1 | 14-07-2005 |
| CN 115312303 | A | 08-11-2022 | NONE | | |
| US 2017250025 | A1 | 31-08-2017 | CN | 107134358 A | 05-09-2017 |
| | | | CN | 112700961 A | 23-04-2021 |
| | | | EP | 3211646 A1 | 30-08-2017 |
| | | | US | 2017250025 A1 | 31-08-2017 |
| US 2022320998 | A1 | 06-10-2022 | US | 2022320998 A1 | 06-10-2022 |
| | | | US | 2025055369 A1 | 13-02-2025 |

EPO FORM P0459

For more details about this annex : see Official Journal of the European Patent Office, No. 12/82